(19) Europäisches Patentamt
European Patent Office
Office européen des brevets

(11) EP 4 010 421 B1

(12) **EUROPEAN PATENT SPECIFICATION**

(45) Date of publication and mention of the grant of the patent:
**21.05.2025 Bulletin 2025/21**

(21) Application number: **20765388.2**

(22) Date of filing: **31.07.2020**

(51) International Patent Classification (IPC):
***C08L 23/16*** *(2006.01)* ***C08F 210/06*** *(2006.01)*
***C09J 123/16*** *(2006.01)* ***C08L 9/06*** *(2006.01)*

(52) Cooperative Patent Classification (CPC):
(C-Sets available)
**C08J 3/226; C08L 9/06** (Cont.)

(86) International application number:
**PCT/US2020/044406**

(87) International publication number:
**WO 2021/025977 (11.02.2021 Gazette 2021/06)**

(54) **PROPYLENE-ALPHA-OLEFIN-DIENE TERPOLYMER ADDITIVE FOR IMPROVING RUBBER TACK**

PROPYLEN-ALPHA-OLEFIN-DIEN-TERPOLYMER-ADDITIV ZUR VERBESSERUNG DER KLEBRIGKEIT VON GUMMI

ADDITIF TERPOLYMÈRE DE PROPYLÈNE-ALPHA-OLÉFINE-DIÈNE POUR AMÉLIORER LA PÉGOSITÉ DU CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019 US 201962882629 P**

(43) Date of publication of application:
**15.06.2022 Bulletin 2022/24**

(73) Proprietor: **ExxonMobil Chemical Patents Inc.**
**Baytown, TX 77520 (US)**

(72) Inventors:
- **JOSHI, Milind, B.**
  **Bengaluru, Karnataka 560075 (IN)**
- **PENG, Xiao Bo**
  **Shanghai, 200131 (CN)**
- **GALLEZ, Vincent, B.**
  **1340 Ottignies - Louvain La Neuve (BE)**
- **BAI, Zhifeng**
  **Houston, TX 77059 (US)**
- **KOLB, Rainer**
  **Kingwood, TX 77345 (US)**
- **LOYD, Scott, H.**
  **League City, TX 77573 (US)**

(74) Representative: **ExxonMobil Petroleum & Chemical BV**
**IP Law Europe**
**Hermeslaan 2**
**1831 Machelen (BE)**

(56) References cited:
**EP-A1- 3 201 009** **EP-A1- 3 201 270**
**WO-A1-2018/190940** **WO-A1-2019/112728**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 010 421 B1

(52) Cooperative Patent Classification (CPC): (Cont.)

C-Sets
**C08L 9/06, C08K 3/04, C08L 23/14**

## Description

### FIELD

The present disclosure relates to rubber compounds suitable for making industrial conveyor belts and power transmission belts.

### BACKGROUND

Power transmission belts include V-belts, flat belts, toothed or synchronous belts and multi-ribbed belts. Power transmission belt construction and conveyor belt construction typically include an elastomeric belt body, spiraled or helically wound tension cord or other textile tensile member embedded in the belt body, and often other textile reinforcements embedded in the belt body or covering one or more of the belt surfaces.

The elastomeric belt body may include one or more vulcanized rubber compounds. The primary component of the rubber compounds have traditionally included synthetic rubbers like styrene butadiene rubber (SBR).

From a manufacturing standpoint, rubber sheets are staked together before curing the rubber compound. Tack (aka., rubber-to-rubber tack, build tack, or green tack) is the force required to separate two identical composition samples (e.g., rubber specimens) or a rubber specimen with another substrate such as textile. The inherent tack in the rubber compound is primarily used to maintain the sheets in contact and avoid entrapment of air between sheets. Then, the rubber is cured or vulcanized to produce the layered structure used when producing the desired belts. Synthetic rubbers typically do not have sufficient inherent tack, which becomes worse when fillers like carbon black are included in the compound. Insufficient tack in the rubber composition before curing can cause layer separation during curing and manufacturing and/or belt failure during operation.

To enhance the tack of the rubber compounds, tackifiers like hydrocarbon resins and phenolic resins have been included in the rubber compounds. However, these tackifiers are typically lower molecular weight polymers with a relatively high glass transition temperature, which can result in higher hysteresis/energy dissipation that is detrimental to the rolling resistance of the belt product. Moreover, the cure properties can be significantly influenced by the addition of a tackifier.

Accordingly, there is a need for rubber compounds with improved tack that maintain roll resistance properties sufficient for belt applications.

International Patent Application Publication WO 2018/190940 describes elastomeric compositions comprising 5-30 phr of a PEDM terpolymer, and 70-95 phr of an ethylene-based copolymer. International Patent Application Publication WO 2016/053541 describes tire tread compositions comprising 5-75 wt% of a diene elastomer; and 5-30 wt% of a PEDM terpolymer having a heat of fusion from 0-80 J/g and containing 1-10 wt% diene, 13-40 wt% ethylene, and 15-85 wt% propylene. International Patent Application Publication WO 2019/112728 describes compositions for use in corner molding applications comprising 5-20 phr of a PEDM terpolymer and 80-95 phr of an ethylene-based copolymer different from the PEDM terpolymer. International Patent Application Publication WO 2016/053542 describes tire tread compositions comprising 5-75 wt% of a diene elastomer and 5-30 wt% of a low-crystalline PEDM terpolymer.

### SUMMARY

The present disclosure relates to rubber compounds suitable for making industrial conveyor belts and power transmission belts. More specifically, the rubber compounds described herein include propylene-$\alpha$-olefin-diene (PE(D)M) terpolymers as a tackifier.

In particular, provided herein is a composition according to claim 1.

Further provided herein is a method according to claim 9.

### BRIEF DESCRIPTION OF THE FIGURES

FIG. 1 is an example layer configuration for a conveyor belt.
FIG. 2 is a fragmented perspective view of a transmission belt.
FIG. 3 is a fragmented perspective view of a transmission belt.
FIG. 4 is a fragmented perspective view of a transmission belt.
FIG. 5 is a plot of elastic modulus (G') as a function of strain for control and example rubber compounds.

## DETAILED DESCRIPTION

The present disclosure includes rubber compounds with improved tack and maintained rolling resistance properties by incorporating a PE(D)M polymer in the rubber compound. More specifically, the rubber compounds described herein comprise 100 phr rubber and 1 phr to 30 phr of a PE(D)M polymer. The PE(D)M polymer has a propylene content of 75 wt% to 95 wt%, a C2 or C4-C20 α-olefin content of 5 wt% to 25 wt%, and a diene content of 2.5 wt% to 20 wt%. Incorporation of such PE(D)M polymers advantageously increase the tack of the rubber compound, reduce the viscosity of the rubber compounds, and maintain the strength and roll resistance properties as compared to rubber compounds without the PE(D)M polymer. Accordingly, the rubber compounds comprising PE(D)M polymers are useful in products like transmission belts and conveyor belts.

## Definitions

As used herein, the term "copolymer" is meant to include polymers having two or more monomers. The term "polymer" as used herein includes, but is not limited to, homopolymers, copolymers, terpolymers, etc., and alloys and blends thereof. The term "terpolymer" as used herein refers to a polymer synthesized from three different monomers. Terpolymers may be produced (1) by mixing all three monomers at the same time or (2) by sequential introduction of the different comonomers. The mixing of comonomers may be done in one, two, or possibly three different reactors in series and/or in parallel. The term "polymer" as used herein also includes impact, block, graft, random, and alternating copolymers. The term "polymer" shall further include all possible geometrical configurations unless otherwise specifically stated. Such configurations may include isotactic, syndiotactic and random (*i.e.*, atactic) symmetries.

The term "monomer" or "comonomer," as used herein, can refer to the monomer used to form the polymer (*i.e.*, the unreacted chemical compound in the form prior to polymerization) and can also refer to the monomer after it has been incorporated into the polymer, also referred to herein as a "[monomer]-derived unit". For example, a polymer described as comprising propylene monomers, ethylene monomers, and diene monomers would readily be identified by one skilled in the art as a polymer comprising propylene-derived unit, ethylene-derived unit, and diene-derived unit.

The term "propylene-α-olefin-diene terpolymer" as used herein includes a polymer derived from propylene, an α-olefin (preferably ethylene), and diene monomers. Propylene-α-olefin-diene terpolymers may be referred to by the shorthand PE(D)M or PEDM, even though α-olefins instead of, or in addition to, ethylene are contemplated as comonomers in such terpolymers, and/or polyenes instead of, or in addition to, dienes are contemplated.

As used herein, "phr" means "parts per hundred parts rubber," where the "rubber" is the total rubber content of the composition. Herein, the identified rubber contributes to the total rubber content and not the PE(D)M. Unless specified otherwise, phr should be taken as phr on a weight basis.

As used herein, "tensile strength" means the amount of stress applied to a sample to break the sample. It can be expressed in Pascals or pounds per square inch (psi). ASTM D412-16 can be used to determine tensile strength of a polymer.

"Mooney viscosity" as used herein is the Mooney viscosity of a polymer or polymer composition. The polymer composition analyzed for determining Mooney viscosity should be substantially devoid of solvent. For instance, the sample may be placed on a boiling-water steam table in a hood to evaporate a large fraction of the solvent and unreacted monomers, and then, dried in a vacuum oven overnight (12 hours, 90°C) prior to testing, in accordance with laboratory analysis techniques, or the sample for testing may be taken from a devolatilized polymer (i.e., the polymer post-devolatilization in industrial-scale processes). Unless otherwise indicated, Mooney viscosity is measured using a Mooney viscometer according to ASTM D1646-17, but with the following modifications/clarifications of that procedure. First, sample polymer is pressed between two hot plates of a compression press prior to testing. The plate temperature is 125°C +/- 10°C instead of the 50 +/- 5°C recommended in ASTM D1646-17, because 50°C is unable to cause sufficient massing. Further, although ASTM D1646-17 allows for several options for die protection, should any two options provide conflicting results, PET 36 micron should be used as the die protection. Further, ASTM D1646-17 does not indicate a sample weight in Section 8; thus, to the extent results may vary based upon sample weight, Mooney viscosity determined using a sample weight of 21.5 +/- 2.7 g in the D1646-17 Section 8 procedures will govern. Finally, the rest procedures before testing set forth in D1646-17 Section 8 are 23 +/- 3°C for 30 min in air; Mooney values as reported herein were determined after resting at 24 +/- 3°C for 30 min in air. Samples are placed on either side of a rotor according to the ASTM D1646-17 test method; torque required to turn the viscometer motor at 2 rpm is measured by a transducer for determining the Mooney viscosity. The results are reported as Mooney Units (ML, 1+4 @ 125°C), where M is the Mooney viscosity number, L denotes large rotor (defined as ML in ASTM D1646-17), 1 is the pre-heat time in minutes, 4 is the sample run time in minutes after the motor starts, and 125°C is the test temperature. Thus, a Mooney viscosity of 90 determined by the aforementioned method would be reported as a Mooney viscosity of 90 MU (ML, 1+4 @ 125°C). Alternatively, the Mooney viscosity may be reported as 90 MU; in such instance, it should be assumed that the just-described method is used to determine such viscosity, unless otherwise noted. In some instances, a lower test temperature may be used (e.g., 100°C), in which case Mooney is

reported as Mooney Viscosity (ML, 1+4 @ 100°C), or @ T°C where T is the test temperature.

The terms "hydrocarbyl radical," "hydrocarbyl" and "hydrocarbyl group" are used interchangeably throughout this document. Likewise the terms "group", "radical", and "substituent" are also used interchangeably in this document. For purposes of this disclosure, "hydrocarbyl radical" is defined to be a radical, which contains hydrogen atoms and up to 50 carbon atoms and which may be linear, branched, or cyclic, and when cyclic, aromatic or nonaromatic.

Substituted hydrocarbyl radicals are radicals in which at least one hydrogen atom has been replaced with at least one functional group, such as $NR^x_2$, $OR^x$, $SeR^x$, $TeR^x$, $PR^x_2$, $AsR^x_2$, $SbR^x_2$, $SR^x$, $BR^x$ and the like or where at least one non-hydrocarbon atom or group has been inserted within the hydrocarbyl radical, such as -O-, -S-, -Se-, -Te-, $-N(R^x)-$, =N-, $-P(R^x)-$, =P-, $-As(R^x)-$, =As-, $-Sb(R^x)-$, =Sb-, $-B(R^x)-$, =B- and the like, where $R^x$ is independently a hydrocarbyl or halocarbyl radical, and two or more $R^x$ may join together to form a substituted or unsubstituted saturated, partially unsaturated or aromatic cyclic or polycyclic ring structure. Examples of substituted hydrocarbyl include $-CH_2CH_2-O-CH_3$ and $-CH_2-NMe_2$ where the radical is bonded via the carbon atom, but would not include groups where the radical is bonded through the heteroatom such as $-OCH_2CH_3$ or $-NMe_2$.

Silylcarbyl radicals are radicals in which one or more hydrocarbyl hydrogen atoms have been substituted with at least one $SiR^*_3$ containing group or where at least one $-Si(R^*)_2-$has been inserted within the hydrocarbyl radical where R* is independently a hydrocarbyl or halocarbyl radical, and two or more R* may join together to form a substituted or unsubstituted saturated, partially unsaturated or aromatic cyclic or polycyclic ring structure.

Substituted silylcarbyl radicals are radicals in which at least one hydrogen atom has been substituted with at least one functional group such as $-NR^*_2$, -OR*, -SeR*, -TeR*, $-PR^*_2$, $-AsR^*_2$, $-SbR^*_2$, -SR*, $-BR^*_2$, $-GeR^*_3$, $-SnR^*_3$, $-PbR^*_3$ and the like or where at least one non-hydrocarbon atom or group has been inserted within the silylcarbyl radical, such as -O-, -S-, -Se-, -Te-, -N(R*)-, =N-, -P(R*)-, =P-, -As(R*)-, =As-, -Sb(R*)-, =Sb-, -B(R*)-, =B-, $-Ge(R^*)_2-$, $-Sn(R^*)_2-$, $-Pb(R^*)_2-$ and the like, where R* is independently a hydrocarbyl or halocarbyl radical, and two or more R* may join together to form a substituted or unsubstituted saturated, partially unsaturated or aromatic cyclic or polycyclic ring structure. Substituted silylcarbyl radicals are only bonded via a carbon or silicon atom.

Germylcarbyl radicals are radicals in which one or more hydrocarbyl hydrogen atoms have been substituted with at least one $GeR^*_3$ containing group or where at least one - $Ge(R^*)_2$- has been inserted within the hydrocarbyl radical where R* is independently a hydrocarbyl or halocarbyl radical, and two or more R* may join together to form a substituted or unsubstituted saturated, partially unsaturated or aromatic cyclic or polycyclic ring structure. Substituted germylcarbyl radicals are only bonded via a carbon or germanium atom.

Substituted germylcarbyl radicals are radicals in which at least one hydrogen atom has been substituted with at least one functional group such as $-NR^*_2$, -OR*, -SeR*, -TeR*, $-PR^*_2$, $-AsR^*_2$, $-SbR^*_2$, -SR*, $-BR^*_2$, $-SiR^*_3$, $-SnR^*_3$, $-PbR^*_3$ and the like or where at least one non-hydrocarbon atom or group has been inserted within the germylcarbyl radical, such as -O-, -S-, -Se-, -Te-, -N(R*)-, =N-, -P(R*)-, =P-, -As(R*)-, =As-, -Sb(R*)-, =Sb-, -B(R*)-, =B-, $-Si(R^*)_2-$, $-Sn(R^*)_2-$, $-Pb(R^*)_2-$ and the like, where R* is independently a hydrocarbyl or halocarbyl radical, and two or more R* may join together to form a substituted or unsubstituted saturated, partially unsaturated or aromatic cyclic or polycyclic ring structure.

Halocarbyl radicals are radicals in which one or more hydrocarbyl hydrogen atoms have been substituted with at least one halogen (e.g., F, Cl, Br, I) or halogen-containing group (e.g., $CF_3$).

Substituted halocarbyl radicals are radicals in which at least one halocarbyl hydrogen or halogen atom has been substituted with at least one functional group such as $NR^*_2$, OR*, SeR*, TeR*, $PR^*_2$, $AsR^*_2$, $SbR^*_2$, SR*, $BR^*_2$ and the like or where at least one non-carbon atom or group has been inserted within the halocarbyl radical such as -O-, -S-, -Se-, - Te-, -N(R*)-, =N-, -P(R*)-, =P-, -As(R*)-, =As-, -Sb(R*)-, =Sb-, -B(R*)-, =B- and the like, where R* is independently a hydrocarbyl or halocarbyl radical provided that at least one halogen atom remains on the original halocarbyl radical. Additionally, two or more R* may join together to form a substituted or unsubstituted saturated, partially unsaturated or aromatic cyclic or polycyclic ring structure. Substituted halocarbyl radicals are only bonded via a carbon atom.

A heteroatom is an atom other than carbon or hydrogen.

The term "aryl" or "aryl group" means a monocyclic or polycyclic aromatic ring and the substituted variants thereof, including phenyl, naphthyl, 2-methyl-phenyl, xylyl, 4-bromo-xylyl. Likewise, "heteroaryl" is an aryl group where a ring carbon atom (or two or three ring carbon atoms) has been replaced with a heteroatom, such as N, O, or S. The term "substituted aryl" means: 1) an aryl group where a hydrogen has been replaced by a substituted or unsubstituted hydrocarbyl group, a substituted or unsubstituted halocarbyl group, a substituted or unsubstituted silylcarbyl group, or a substituted or unsubstituted germylcarbyl group. The term "substituted heteroaryl" means: 1) a heteroaryl group where a hydrogen has been replaced by a substituted or unsubstituted hydrocarbyl group, a substituted or unsubstituted halocarbyl group, a substituted or unsubstituted silylcarbyl group, or a substituted or unsubstituted germylcarbyl group.

For nomenclature purposes, the following numbering schemes are used for indenyl, tetrahydro-*s*-indacenyl and tetrahydro-*as*-indacenyl ligands.

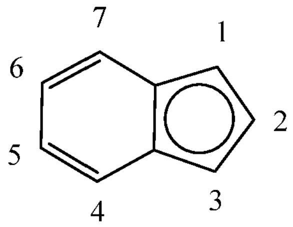

indenyl

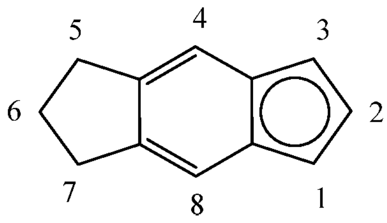

1,5,6,7-tetrahydro-*s*-indacenyl or 5,6,7-trihydro-*s*-indacenyl or *s*-indacenyl

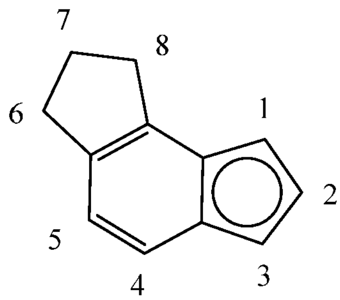

3,6,7,8-trihydro-*as*-indacenyl or 6,7,8-trihydro-*as*-indacenyl or *as*-indacenyl

As used herein, Mn is number average molecular weight, Mw is weight average molecular weight, and Mz is z average molecular weight, wt.% is weight percent, and mol% is mol percent. Molecular weight distribution (MWD), also referred to as polydispersity, is defined to be Mw divided by Mn. Unless otherwise noted, all molecular weight units (e.g., Mw, Mn, Mz) are g/mol.

The following abbreviations may be used herein: Me is methyl, Et is ethyl, Pr is propyl, cPr is cyclopropyl, nPr is n-propyl, iPr is isopropyl, Bu is butyl, nBu is normal butyl, iBu is isobutyl, sBu is sec-butyl, tBu is tert-butyl, Oct is octyl, Ph is phenyl, Bn is benzyl, Cp is cyclopentadienyl, Ind is indenyl, Flu is fluorenyl, and MAO is methylalumoxane.

For purposes of the present disclosure, a "catalyst system" is the combination of at least one catalyst compound, at least one activator, an optional co-activator, and an optional support material. For the purposes of the present disclosure, when catalyst systems are described as comprising neutral stable forms of the components, it is well understood by one of ordinary skill in the art, that the ionic form of the component is the form that reacts with the monomers to produce polymers. For the purposes of the present disclosure, "catalyst system" includes both neutral and ionic forms of the components of a catalyst system, such as the catalyst compounds.

In the description herein, the catalyst may be described as a catalyst precursor, a pre-catalyst, a pre-catalyst compound, a metallocene catalyst compound, a metallocene catalyst, or a transition metal compound, and these terms are used interchangeably.

A metallocene catalyst is defined as an organometallic transition metal compound with at least one $\pi$-bound cyclopentadienyl moiety (or substituted cyclopentadienyl moiety) bound to a transition metal.

For purposes of the present disclosure, in relation to metallocene catalyst compounds, the term "substituted" means that one or more hydrogen atoms have been replaced with a hydrocarbyl, heteroatom (such as a halide), or a heteroatom containing group, (such as silylcarbyl, germylcarbyl, halocarbyl, etc.). For example, methyl cyclopentadiene (Cp) is a Cp group substituted with a methyl group. Two or more adjacent hydrogen atoms may be replaced by a hydrocarbdiyl to form a multi-ring cyclopentadienyl moiety for example, indenyl, fluorenyl, tetrahydro-s-indacenyl and the like.

For purposes of the present disclosure, "alkoxides" include those where the alkyl group is a $C_1$ to $C_{10}$ hydrocarbyl. The alkyl group may be straight chain, branched, or cyclic. The alkyl group may be saturated or unsaturated. In some embodiments, the alkyl group may comprise at least one aromatic group.

Numerical ranges used herein include the numbers recited in the range. For example, the numerical range "from 1 wt% to 10 wt%" includes 1 wt% and 10 wt% within the recited range.

## Rubber Compounds

The rubber compounds of the present disclosure comprise 100 phr rubber and 1 phr to 30 phr (e.g., 1 phr to 5 phr, or 5 phr to 10 phr, or 10 phr to 20 phr, or 20 phr to 30 phr, or 7 phr to 15 phr, or 17 phr to 25 phr) of one or more PE(D)M polymers. The rubber compounds also include additives like fillers (e.g., carbon black and/or mineral fillers), process oils, processing aids, curing agents, vulcanization accelerators, and other additives.

The rubbers are butadiene copolymers, isoprene copolymers and the mixtures of these elastomers. Such copolymers are chosen from the group consisting of butadiene/styrene copolymers (SBR), isoprene/butadiene copolymers (BIR), isoprene/styrene copolymers (SIR), and isoprene/butadiene/styrene copolymers (SBIR).

A preferred rubber is an SBR. The SBR may be prepared by emulsion or solution polymerization. The SBR may have a moderate styrene content of 10 wt% to 60 wt% (e.g., 10 wt% to 30 wt%, or 30 wt% to 60 wt%), a content of vinyl bonds of the butadiene part of from 15 wt% to 70 wt%, and a content of trans-1,4-bonds of from 15 mol% to 75 mol%. The SBR preferably has a Tg of -55°C to -10°C (e.g., -55°C to -35°C, or -35°C to -10°C). The SBR preferably has a Mooney

viscosity at 100°C of 30 to 120 (e.g., 40 to 80, or 60 to 120).

Examples of commercially available SBRs from JSR Corporation include, but are not limited to, JSR 1500 (25 wt % styrene), JSR 1502 (25 wt % styrene), JSR 1503 (25 wt % styrene), JSR 1507 (25 wt % styrene), JSR 0202 (45 wt % styrene), JSR SL552 (25 wt % styrene), JSR SL574 (15 wt % styrene), JSR SL563 (20 wt % styrene), JSR 0051, JSR 0061, or the like.

PE(D)M polymers suitable for use in the rubber compounds described herein preferably have a propylene content of 75 wt% to 95 wt% (e.g., 80 wt% to 95 wt%), a C2 or C4-C20 $\alpha$-olefin content of 5 wt% to 25 wt%, and a diene content of 2.5 wt% to 20 wt% (e.g., 5 wt% to 15 wt%, or 10 wt% to 20 wt%).

The rubber compounds described herein can comprise a single PE(D)M polymer or a mixture of two or more PE(D)M polymers (e.g., a dual reactor product).

Suitable C2 or C4-C20 $\alpha$-olefins may include, but are not limited to, ethylene, butylene, pentylene, hexylene, heptylene, octylene, nonylene, decylene, undecylene, dodecylene, and the like, and branched isomers thereof. Ethylene is particularly preferred. Combinations of C2 or C4-C20 $\alpha$-olefins may be used.

Suitable dienes may be conjugated or non-conjugated. Preferably, the dienes are non-conjugated. Suitable dienes may include, but are not limited to, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; vinyl norbornene (VNB); dicyclopendadiene (DCPD); and combinations thereof. Preferably, the diene is ENB or VNB.

Wt.% of $C_2$, wt.% of $C_3$-$C_{20}$ olefin and wt.% of diene can be measured by $^{13}$CNMR. Wt.% numbers throughout this document are uncorrected numbers wherein wt.% of $C_2$ plus wt.% of $C_3$-$C_{20}$ olefin equals 100%, unless specifically referred to as being corrected.

For ethylene-propylene and ethylene-propylene-diene copolymers, FTIR is used to measure ethylene, using ASTM D3900; and typically ASTM D6047 for diene content. The former provides uncorrected $C_2$ wt.% values.

The corrected wt.% of $C_2$ can be calculated from uncorrected wt.% $C_2$ using the equation below:

$$\text{Corrected wt.\% } C_2 = [\text{uncorrected wt.\% } C_2 \times (100 - \text{wt.\% diene})]/100$$

where the wt.% of ethylene and wt.% of diene are determined by FTIR or by NMR methods.

When the $C_3$-$C_{20}$ olefin is propylene, ASTM D3900 is followed to determine propylene content. When the diene is ENB, ASTM D6047 is followed to determine ENB content. If ASTM established IR methods are not available for other $C_3$-$C_{20}$ olefins, and/or other dienes, $^{13}$C NMR is used.

For purposes of the present disclosure, the mole fractions of ethylene, $C_3$-$C_{20}$ olefin, and diene are calculated using the following equations A, B, and C, respectively:

Equation (A):

$$C_2 \text{ mole fraction} = \frac{\frac{\text{wt.\% } C_2}{Mw(C_2)}}{\frac{\text{wt.\% } C_2}{Mw(C_2)} + \frac{100 - \text{wt.\% } C_2 - \text{wt.\% diene}}{Mw(C_3 - C_{20} \text{ olefin})} + \frac{\text{wt.\% diene}}{Mw(\text{diene})}}$$

Equation (B):

$$C_3 - C_{20} \text{ mole fraction} = \frac{\frac{100 - \text{wt.\% } C_2 - \text{wt.\% diene}}{Mw(C_3 - C_{20} \text{ olefin})}}{\frac{\text{wt.\% } C_2}{Mw(C_2)} + \frac{100 - \text{wt.\% } C_2 - \text{wt.\% diene}}{Mw(C_3 - C_{20} \text{ olefin})} + \frac{\text{wt.\% diene}}{Mw(\text{diene})}}$$

Equation (C):

$$\text{Diene mole fraction} = \frac{\frac{\text{wt.\% diene}}{Mw(\text{diene})}}{\frac{\text{wt.\% } C_2}{Mw(C_2)} + \frac{100 - \text{wt.\% } C_2 - \text{wt.\% diene}}{Mw(C_3 - C_{20} \text{ olefin})} + \frac{\text{wt.\% diene}}{Mw(\text{diene})}}$$

where "Mw($C_2$)" is the molecular weight of ethylene in g/mol, "Mw($C_3$-$C_{20}$ olefin)" is the molecular weight of the $C_3$-$C_{20}$ olefin in g/mol, "Mw(diene)" is the molecular weight of diene in g/mol, and "wt.% $C_2$" is corrected wt.% of $C_2$.

PE(D)M polymers of the present disclosure may have a weight average molecular weight (Mw) of 5,000,000 or less, a number average molecular weight (Mn) of 3,000,000 or less, and/or a z-average molecular weight (Mz) of 10,000,000 or less. When a mixture of PE(D)M polymers are used, the molecular weight distribution of the PE(D)M polymers may have two or more modes (e.g., bimodal). The distributions and the moments of molecular weight (number average molecular weight (Mn), weight average molecular weight (Mw), and z-average molecular weight (Mz), Mw/Mn, etc.) can be determined by using a Gel Permeation Chromatography (GPC)

PE(D)M polymers of the present disclosure may have an Mw of from 5,000 g/mol to 5,000,000 g/mol, or from 10,000 g/mol to 1,000,000 g/mol, or from 20,000 g/mol to 500,000 g/mol, or from 50,000 g/mol to 400,000 g/mol. The PE(D)M polymer may have an Mn of 2,500 g/mol to 2,500,000 g/mol, or from 5,000 g/mol to 500,000 g/mol, or from 10,000 g/mol to 250,000 g/mol, or from 25,000 g/mol to 200,000 g/mol. The PE(D)M polymer may have an Mz of 10,000 g/mol to 7,000,000 g/mol, or from 50,000 g/mol to 1,000,000 g/mol, or from 80,000 g/mol to 700,000 g/mol, or from 100,000 g/mol to 500,000 g/mol. When a mixture of PE(D)M polymers is used, the molecular weight distribution of the PE(D)M polymers may have two or more modes (e.g., bimodal) with each mode being characterized by one of the foregoing Mw, Mn, and/or Mz values.

The polydispersity index (PDI = (Mw/Mn)) of PE(D)M polymers of the present disclosure is from 1.5 to 40. For example, a PE(D)M polymer may have an PDI from 1.8 to 3. For purposes of this disclosure, the Mw, Mn and Mz will be defined as measured by a light scattering (LS) detector.

The ratio of Mw/Mn of PE(D)M polymers of the present disclosure is from 1.5 to 3.0, or from 1.75 to 2.5.

PE(D)M polymers of the present disclosure may have a density from 0.85 g/cm$^3$ to 0.92 g/cm$^3$, or from 0.87 g/cm$^3$ to 0.90 g/cm$^3$, or from 0.88 g/cm$^3$ to 0.89 g/cm$^3$, at room temperature as measured per the ASTM D1505-10 test method.

PE(D)M polymers of the present disclosure may have a melt flow rate (MFR, 2.16 kg weight at 230°C), equal to or greater than 0.2 g/10min as measured according to the ASTM D1238-13. The MFR (2.16 kg at 230°C) is from 0.1 g/10min to 100 g/10min, or from 1 g/10min to 100 g/10min, or from 2 g/10min to 30 g/10min, or from 5 g/10min to 30 g/10min, or from 10 g/10min to 30 g/10min, or from 10 g/10min to 25 g/10min, or from 0.5 g/10min to 10g/10min, or from 0.5 g/10min to 5 g/10min, or from 5 g/10min to 10 g/10min.

PE(D)M polymers of the present disclosure have a Mooney viscosity (ML, 1+4 @ 125°C) of less than 100 MU, or less than 75 MU, or less than 60 MU, or less than 30 MU, or less than 20 MU, or less than 15 MU, for example about 14 MU. The Mooney viscosity further is within the range from 1 MU, 5 MU, 10 MU, or 12 MU to 20 MU, 25 MU, or 30 MU.

PE(D)M polymers of the present disclosure have a heat of fusion ($H_f$) of less than 1 J/g. Optionally, PE(D)M polymers are amorphous. Additionally, PE(D)M polymers can have atactic propylene sequences. The PE(D)M polymer can have a glass transition temperature (Tg) from -40°C to -2°C, or from -35°C to -3°C. The PE(D)M polymers can have a $H_f$ of less than 1 J/g and syndiotactic r diads where the percentage of r diads is low enough to still be substantially amorphous (i.e., have the low $H_f$). $H_f$ and Tg can be determined by differential scanning calorimetry (DSC).

PE(D)M polymers of the present disclosure preferably have atactic polypropylene sequences. Also or instead, they are preferably amorphous, meaning they will exhibit no melting peak when subjected to differential scanning calorimetry (DSC) testing. Alternatively, PE(D)M polymers may exhibit minor melting peak, such that they may be observed to have Hf < 1 J/g according to the DSC methodology described herein. Further, where a PE(D)M exhibits any melting peak, such peak may be a single peak, or the PE(D)M may show secondary melting peaks adjacent to the principal peak. For purposes herein, such secondary melting peaks are considered together as a single melting point, with the highest of these peaks (relative to baseline as described herein) being considered as the melting point of the PE(D)M polymer.

According to yet further embodiments, the crystallinity of PEDM terpolymers may be expressed in terms of percentage of crystallinity (i.e., %crystallinity), as determined according to the DSC procedure described herein. Although PEDM according to certain embodiments is amorphous (and may therefore be said to have 0% crystallinity), if a PEDM according to various other embodiments exhibits any crystallinity, it preferably has a %crystallinity of from 0.1% to 5%, preferably 0.1% to 3%. (The degree of crystallinity is determined by dividing (i) heat of fusion measured by (ii) the heat of fusion for 100% crystalline polyethylene, which has the value of 293 J/g (B. Wunderlich, Thermal Analysis, Academic Press, 1990, pp. 417-431).)

The tacticity of an $\alpha$-olefin-ethylene-diene polymer is measured by $^{13}$C NMR. Polypropylene microstructure is determined by $^{13}$C-NMR spectroscopy, including the concentration of isotactic and syndiotactic diads ([m] and [r]), triads ([mm] and [rr]), and pentads ([mmmm] and [rrrr]). The designation "m" or "r" describes the stereochemistry of pairs of contiguous propylene groups, "m" referring to meso and "r" to racemic. Polymer resonance peaks are referenced to mmmm = 21.8 ppm. Calculations involved in the characterization of polymers by NMR are described by F. A. Bovey in Polymer Conformation and Configuration (Academic Press, New York 1969) and J. Randall in Polymer Sequence Determination, 13C-NMR Method (Academic Press, New York, 1977).

The "propylene tacticity index", expressed herein as [m/r], is calculated as defined in H.N. Cheng, Macromolecules, 17, p. 1950 (1984). When [m/r] is 0 to less than 1.0, the polymer is generally described as syndiotactic, when [m/r] is 1.0 the polymer is atactic, and when [m/r] is greater than 1.0 the polymer is generally described as isotactic. The

[m/r] region from 0 to 1.0 is a continuum with polymers having a value closer to zero being more syndiotactic and those having a value closer to one being more atactic like. The phrases "propylene tacticity index", "tacticity index" and "$C_{3+}$olefin tacticity index" are used interchangeably.

For polypropylene, the "mm triad tacticity index" of a polymer is a measure of the relative isotacticity of a sequence of three adjacent propylene units connected in a head-to-tail configuration. More specifically, in the present invention, the mm triad tacticity index (also referred to as the "mm Fraction") of a polypropylene homopolymer or copolymer is expressed as the ratio of the number of units of meso tacticity to all of the propylene triads in the copolymer:

$$\text{mm Fraction} = \frac{\text{PPP(mm)}}{\text{PPP(mm)} + \text{PPP(mr)} + \text{PPP(rr)}}$$

where PPP(mm), PPP(mr) and PPP(rr) denote peak areas derived from the methyl groups of the second units in the possible triad configurations for three head-to-tail propylene units, shown below in Fischer projection diagrams:

PPP(mm):

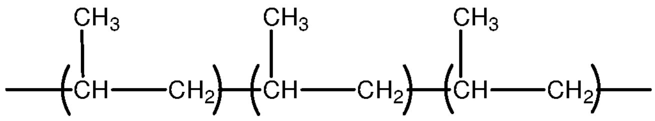

PPP(mr):

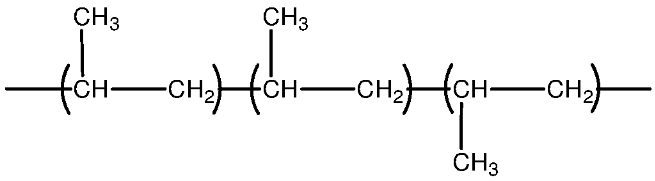

PPP(rr):

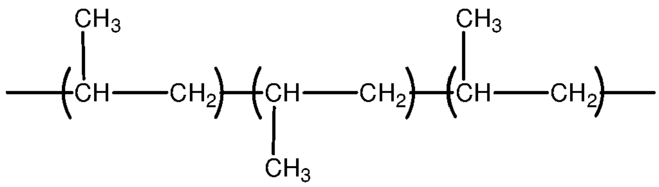

The "rr triad tacticity index" of a polymer is a measure of the relative syndiotacticity of a sequence of three adjacent propylene units connected in a head-to-tail configuration. More specifically, in the present invention, the rr triad tacticity index (also referred to as the "rr Fraction") of a polypropylene homopolymer or copolymer is expressed as the ratio of the number of units of racemic tacticity to all of the propylene triads in the copolymer:

$$\text{rr Fraction} = \frac{\text{PPP(rr)}}{\text{PPP(mm)+PPP(mr)} + \text{PPP(rr)}}.$$

The calculation of the mm Fraction of a propylene polymer is described in U.S. Patent 5,504,172 (homopolymer: column 25, line 49 to column 27, line 26; copolymer: column 28, line 38 to column 29, line 67). For further information on how the mm triad tacticity can be determined from a $^{13}$C-NMR spectrum, see 1) J. A. Ewen, Catalytic Polymerization of Olefins: Proceedings of the International Symposium on Future Aspects of Olefin Polymerization, T. Keii and K. Soga, Eds. (Elsevier, 1986), pp. 271-292; and 2) U.S. Patent Application Publication No. US2004/054086 (paragraphs [0043] to [0054]).

Similarly m diads and r diads can be calculated as follows where mm, mr and mr are defined above:

$$m = mm + \tfrac{1}{2}\, mr$$

$$r = rr + \frac{1}{2}\, mr.$$

Preferably, the "propylene tacticity index" [m/r] of an $\alpha$-olefin-ethylene-diene polymer of the present disclosure is greater than 0.30, alternatively greater than 0.40, alternatively greater than 0.50, and with an upper limit of 1.2, alternatively 1.1, alternatively, 1.0, alternatively 0.9.

Analogous calculations can be done for other $C_{3+}$olefin polymers including those with a low content of ethylene. For further information see J.C. Randall, Polymer Reviews, "A Review of High Resolution liquid 13C NMR Characterizations of ethylene-based polymers" (1989) 29:2 201-317.

The crystallinity of PE(D)M polymers may be expressed in terms of percentage of crystallinity (*i.e.*, %crystallinity), as determined according to the DSC procedure described herein. Although PE(D)M polymers may be amorphous (and may therefore be said to have 0% crystallinity), if PE(D)M polymers exhibit any crystallinity, it preferably has a %crystallinity of from 0.1% to 5%, preferably 0.1% to 3%.

Further, as mentioned above, where the sample exhibits no melting peak, as in the case of amorphous polymers, it may be said to have no Hf. However, even some amorphous or near-amorphous PE(D)M samples might exhibit a minor melting peak, e.g., such that Hf on the first melt may be observed as < 1 J/g. Therefore, for purposes of the present application, a PE(D)M may be considered amorphous when it has Hf < 1 J/g, or alternatively when it exhibits no discernable melting peak, both observations being taken from a first melt in the above-described DSC procedure. For example, PEDM terpolymers described herein may have a Hf, as measured from the first heating cycle after annealing for example at 140 °C for 5 minutes and then aging at room temperature for 1 hour, or 1 day, or 1 week, or 4 weeks, by the DSC procedure described herein of < 1 J/g.

PE(D)M polymers can have a glass transition temperature (Tg), as determined by the DSC procedure described herein, from -45°C to -2°C, or from -40°C to -25°C, -40°C to - 20°C, -35°C to -25°C, -40°C to -15°C, or -35°C to -15°C; or alternatively from -20°C to -2°C, or from -15°C to -2°C, or from -10°C to -2°C, or from -5°C to -2°C.

The PEDM terpolymers of the present disclosure may have a Tg (°C) greater than or equal to -7.386-(87.98*E) +(294*D) and less than or equal to -1.386-(87.98*E)+(294*D) wherein E is the mole fraction of ethylene in the polymer and D is the mole fraction of diene in the polymer. The PEDM terpolymers of the present disclosure may have a Tg (°C) greater than or equal to -6.886-(87.98*E)+(294*D) and less than or equal to -1.886-(87.98*E)+(294*D) wherein E is the mole fraction of ethylene in the polymer and D is the mole fraction of diene in the polymer.

The PEDM terpolymers may be made by a polymerization process including contacting propylene, a C2, C4-12 $\alpha$-olefin (such as ethylene), and diene (such as ENB) with a catalyst system comprising an activator, optional support, and a catalyst compound. The catalyst compound, optional support and activator may be combined in any order, and are combined typically prior to contacting the catalyst system with the monomers.

Polymerization processes of the present disclosure can be carried out in any suitable manner, such as any suitable suspension, homogeneous, bulk, solution, slurry, or gas phase polymerization process. Such processes can be run in a batch, semi-batch, or continuous mode. Gas phase polymerization processes and slurry processes are preferred. Additional description of processes for making the PEDM terpolymers is described in PCT/US2019/022738, filed March 18, 2019, and PCT/US2019/022764, filed on March 18, 2019.

Described herein but not claimed are polymerization processes where propylene, $C_2$, C4-C12 olefin (such as ethylene), and diene (such as ENB) are contacted with a catalyst system comprising an activator, optional support, and a catalyst compound. The catalyst compound, optional support and activator may be combined in any order, and are combined typically prior to contacting the catalyst system with the monomer. In at least one embodiment, the catalyst compound is represented by formula (I):

$$T_yCp'_mMG_nX_q \qquad (I)$$

wherein:

Cp' is a tetrahydroindacenyl group (such as tetrahydro-s-indacenyl or tetrahydro-*as*-indacenyl) which is optionally substituted or unsubstituted, provided that when Cp' is tetrahydro-*s*-indacenyl: 1) the 3 and/or 4 positions are not aryl or substituted aryl, 2) the 3 position is not directly bonded to a group 15 or 16 heteroatom, 3) there are no additional rings fused to the tetrahydroindacenyl ligand, 4) T is not bonded to the 2-position, and 5) the 5, 6, or 7-position (preferably the 6 position) is geminally disubstituted, preferably with two $C_1$-$C_{10}$ alkyl groups;

M is a group 2, 3, 4, 5, or 6 transition metal, preferably group 4 transition metal, for example titanium, zirconium, or hafnium (preferably titanium);

T is a bridging group (such as dialkylsilylene, dialkylcarbylene, phen-1,2-diyl, substituted phen-1,2-diyl, cyclohex-1,2-diyl or substituted cyclohex-1,2-diyl). T is preferably $(CR^8R^9)_x$, $SiR^8R^9$ or $GeR^8R^9$ where x is 1 or 2, $R^8$ and $R^9$ are independently selected from hydrogen, substituted or unsubstituted hydrocarbyl, halocarbyl, silylcarbyl and germylcarbyl and $R^8$ and $R^9$ may optionally be bonded together to form a ring structure, and in a particular embodiment, $R^8$

and $R^9$ are not aryl);

y is 0 or 1, indicating the absence or presence of T;

G is a heteroatom group represented by the formula $JR^i_{z-y}$ where J is N, P, O or S, $R^i$ is a $C_1$ to $C_{100}$ hydrocarbyl group (such as a $C_1$ to $C_{20}$ hydrocarbyl group), and z is 2 when J is N or P, and z is 1 when J is O or S (preferably J is N and z is 2) ($R^i$ can be a linear, branched or cyclic $C_1$ to $C_{20}$ hydrocarbyl group, preferably independently selected from methyl, ethyl, propyl, butyl, pentyl, hexyl, heptyl, octyl, nonyl, decyl, phenyl, and isomers thereof, including t-butyl, cyclododecyl, cyclooctyl, preferably t-butyl and or cyclododecyl);

X is a leaving group (such as a halide, a hydride, an alkyl group, an alkenyl group or an arylalkyl group) and optionally two or more X may form a part of a fused ring or a ring system;

m = 1; n = 1, 2 or 3; q = 1, 2 or 3; and the sum of m+n+q is equal to the oxidation state of the transition metal (preferably 3, 4, 5, or 6, preferably 4); preferably m = 1, n = 1, q is 2, and y = 1.

In at least one embodiment of formula (I), M is a group 4 transition metal (preferably Hf, Ti and/or Zr, preferably Ti). In at least one embodiment of formula (I), $JR^i_{z-y}$ is cyclododecyl amido, t-butyl amido, and or 1-adamantyl amido.

In at least one embodiment of formula (I), each X is, independently, selected from hydrocarbyl radicals having from 1 to 20 carbon atoms, aryls, hydrides, amides, alkoxides, sulfides, phosphides, halides, dienes, amines, phosphines, ethers, and a combination thereof, (two X's may form a part of a fused ring or a ring system), preferably each X is independently selected from halides, aryls and $C_1$ to $C_5$ alkyl groups, preferably each X is a benzyl, methyl, ethyl, propyl, butyl, pentyl, or chloro group.

In at least one embodiment of formula (I), the Cp' group may be substituted with a combination of substituent groups R. R includes one or more of hydrogen, or linear, branched alkyl radicals, or alkenyl radicals, alkynyl radicals, cycloalkyl radicals or aryl radicals, acyl radicals, alkoxy radicals, aryloxy radicals, alkylthio radicals, dialkylamino radicals, alkoxycarbonyl radicals, aryloxycarbonyl radicals, carbamoyl radicals, alkyl- or dialkylcarbamoyl radicals, acyloxy radicals, acylamino radicals, arylamino radicals, straight, branched or cyclic, alkylene radicals, or combination thereof. In at least one embodiment, substituent groups R have up to 50 non-hydrogen atoms, preferably from 1 to 30 carbon, that can also be substituted with halogens or heteroatoms or the like, provided that when Cp' is tetrahydro-s-indacenyl: 1) the 3 and/or 4 position is not aryl or substituted aryl, 2) the 3-position is not substituted with a group 15 or 16 heteroatom, 3) there are no additional rings fused to the tetrahydroindacenyl ligand, T is not bonded to the 2-position, and 5) the 5, 6, or 7-position (preferably the 6 position) is geminally disubstituted, preferably with two $C_1$-$C_{10}$ alkyl groups. Non-limiting examples of alkyl substituents R include methyl, ethyl, propyl, butyl, pentyl, hexyl, cyclopentyl, cyclohexyl, benzyl or phenyl groups and the like, including all their isomers, for example, tertiary butyl, isopropyl and the like. Other hydrocarbyl radicals include fluoromethyl, fluoroethyl, difluoroethyl, iodopropyl, bromohexyl chlorobenzyl and hydrocarbyl substituted organometalloid radicals including trimethylsilyl, trimethylgermyl, methyldiethylsilyl and the like; and halocarbyl-substituted organometalloid radicals including tris(trifluoromethyl)silyl, methylbis(difluoromethyl)silyl, bromomethyldimethylgermyl and the like; and disubstituted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, boron, aluminum, nitrogen, phosphorus, oxygen, tin, sulfur, germanium and the like, including olefins such as, but not limited to, olefinically unsaturated substituents including vinyl-terminated ligands, for example but-3-enyl, prop-2-enyl, hex-5-enyl and the like.

In at least one embodiment of formula (I), the substituent(s) R are, independently, hydrocarbyl groups, heteroatoms, or heteroatom containing groups, such as methyl, ethyl, propyl, butyl, pentyl, hexyl, heptyl, octyl, nonyl, decyl, undecyl, dodecyl or an isomer thereof, or a $C_1$ to $C_{20}$ hydrocarbyl substituted with an N, O, S and or P heteroatom or heteroatom containing group (typically having up to 12 atoms, including the N, O, S and P heteroatoms), provided that when Cp' is tetrahydro-s-indacenyl, the 3 and/or 4 position are not aryl or substituted aryl, the 3 position is not substituted with a group 15 or 16 heteroatom, and there are no additional rings fused to the tetrahydroindacenyl ligand, T is not bonded to the 2-position, and the 5, 6, or 7-position (preferably the 6 position) is geminally disubstituted, preferably with two $C_1$-$C_{10}$ alkyl groups.

In at least one embodiment of formula (I), the Cp' group is tetrahydro-*as*-indacenyl or tetrahydro-s-indacenyl which may be substituted.

y can be 1 where T is a bridging group containing at least one group 13, 14, 15, or 16 element, in particular boron or a group 14, 15 or 16 element. Examples of suitable bridging groups include P(=S)R*, P(=Se)R*, P(=O)R*, $R^*_2C$, $R^*_2Si$, $R^*_2Ge$, $R^*_2CCR^*_2$, $R^*_2CCR^*_2CR^*_2$, $R^*_2CCR^*_2CR^*_2CR^*_2$, R*C=CR*, R*C=CR*CR*$_2$, $R^*_2$CCR*=CR*CR*$_2$, R*C=CR*CR*=CR*, R*C=CR*CR*$_2$CR*$_2$, $R^*_2CSiR^*_2$, $R^*_2SiSiR^*_2$, $R^*_2SiOSiR^*_2$, $R^*_2CSiR^*_2CR^*_2$, $R^*_2SiCR^*_2SiR^*_2$, R*C=CR*SiR*$_2$, $R^*_2CGeR^*_2$, $R^*_2GeGeR^*_2$, $R^*_2CGeR^*_2CR^*_2$, $R^*_2GeCR^*_2GeR^*_2$, $R^*_2SiGeR^*_2$, R*C=CR*GeR*$_2$, R*B, $R^*_2$C-BR*, $R^*_2$C-BR*-CR*$_2$, $R^*_2$C-O-CR*$_2$, $R^*_2$CR*$_2$C-O-CR*$_2$CR*$_2$, $R^*_2$C-O-CR*$_2$CR*$_2$, $R^*_2$C-O-CR*=CR*, $R^*_2$C-S-CR*$_2$, $R^*_2$CR*$_2$C-S-CR*$_2$CR*$_2$, $R^*_2$C-S-CR*$_2$CR*$_2$, $R^*_2$C-S-CR*=CR*, $R^*_2$C-Se-CR*$_2$, $R^*_2$CR*$_2$C-Se-CR*$_2$CR*$_2$, $R^*_2$C-Se-CR*$_2$CR*$_2$, $R^*_2$C-Se-CR*=CR*, $R^*_2$C-N=CR*, $R^*_2$C-NR*-CR*$_2$, $R^*_2$C-NR*-CR*$_2$CR*$_2$, $R^*_2$C-NR*-CR*=CR*,

$R^*_2CR^*_2C-NR^*-CR^*_2CR^*_2$, $R^*_2C-P=CR^*$, $R^*_2C-PR^*-CR^*_2$, O, S, Se, Te, NR*, PR*, AsR*, SbR*, O-O, S-S, R*N-NR*, R*P-PR*, O-S, O-NR*, O-PR*, S-NR*, S-PR*, and R*N-PR* where R* is hydrogen or a $C_1-C_{20}$ containing hydrocarbyl, substituted hydrocarbyl, halocarbyl, substituted halocarbyl, silylcarbyl or germylcarbyl substituent, and optionally two or more adjacent R* may join to form a substituted or unsubstituted, saturated, partially unsaturated or aromatic, cyclic or polycyclic substituent, and optionally any one or more adjacent R* and $R^i$ may join to form a substituted or unsubstituted, saturated, partially unsaturated or aromatic, cyclic or polycyclic substituent. Preferred examples for the bridging group T include $-CH_2-$, $-CH_2CH_2-$, $-SiMe_2-$, $-SiPh_2-$, -Si(Me)(Ph)-, $-Si(CH_2)_3-$, $-Si(CH_2)_4-$, -O-, -S-, -N(Ph)-, -P(Ph)-, -N(Me)-, -P(Me)-, -N(Et)-, -N(Pr)-, -N(Bu)-, -P(Et)-, -P(Pr)-, $-(Me)_2SiOSi(Me)_2-$, and -P(Bu)-. In a preferred embodiment of the present disclosure, when Cp' is tetrahydro-s-indacenyl and T is $R^*_2Si$, then R* is not aryl. In some embodiments, R* is not aryl or substituted aryl.

In at least one embodiment, the catalyst compound is one or more bridged transition metal compounds represented by formula (II):

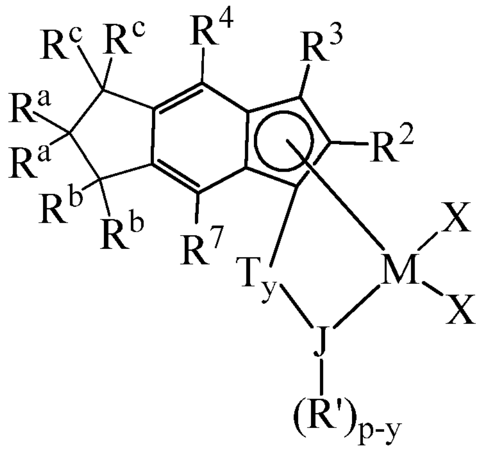

(II)

where M is a group 4 metal (such as Hf, Ti or Zr, preferably Ti);
J is N, O, S or P;
p is 2 when J is N or P, and is 1 when J is O or S (preferably J is N, y =1, and p = 2);
each $R^a$ is independently $C_1-C_{10}$ alkyl (alternately a $C_2-C_{10}$ alkyl);
each $R^b$ and each $R^c$ is independently hydrogen or a $C_1-C_{10}$ alkyl (alternately a $C_2-C_{10}$ alkyl); each $R^2$, $R^3$, $R^4$, and $R^7$ is independently hydrogen, or a $C_1-C_{50}$ substituted or unsubstituted hydrocarbyl, halocarbyl, silylcarbyl or germylcarbyl, provided that: 1) $R^3$ and/or $R^4$ are not aryl or substituted aryl, 2) $R^3$ is not directly bonded to a group 15 or 16 heteroatom, and 3) adjacent $R^4$, $R^c$, $R^a$, $R^b$, or $R^7$ do not join together to form a fused ring system;
each R' is, independently, a $C_1-C_{100}$ substituted or unsubstituted hydrocarbyl, halocarbyl, silylcarbyl or germylcarbyl;
T is a bridging group and y is 0 or 1 indicating the absence (y=0) or presence (y=1) of T;
and each X is, independently, a leaving group, or two Xs are joined and bound to the metal atom to form a metallocycle ring, or two Xs are joined to form a chelating ligand, a diene ligand, or an alkylidene.

In at least one embodiment, the catalyst compound is one or more bridged transition metal compounds represented by formula (III):

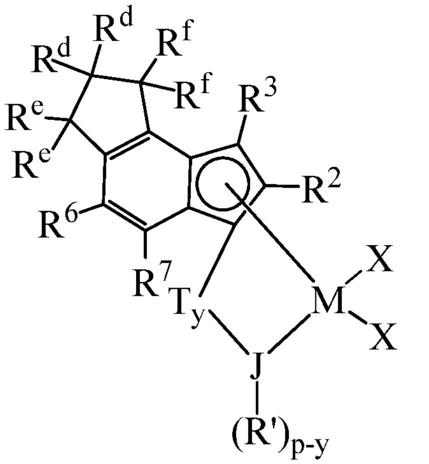

(III)

where M is a group 4 metal (such as Hf, Ti or Zr, preferably Ti);
J is N, O, S or P;
p is 2 when J is N or P, and is 1 when J is O or S (preferably J is N, y =1, and p = 2);
each $R^d$, $R^e$ and $R^f$ are independently hydrogen or a $C_1$-$C_{10}$ alkyl (alternately a $C_2$-$C_{10}$ alkyl);
each $R^2$, $R^3$, $R^6$, and $R^7$ is independently hydrogen, or a $C_1$-$C_{50}$ substituted or unsubstituted hydrocarbyl, halocarbyl, silylcarbyl or germylcarbyl;
each R' is, independently, a $C_1$-$C_{100}$ substituted or unsubstituted hydrocarbyl, halocarbyl, silylcarbyl or germylcarbyl;
T is a bridging group and y is 0 or 1 indicating the absence (y=0) or presence (y=1) of T;
and each X is, independently, a leaving group, or two Xs are joined and bound to the metal atom to form a metallocycle ring, or two Xs are joined to form a chelating ligand, a diene ligand, or an alkylidene.

In some embodiments of formulae II and III, y is 1 and T is $(CR^8R^9)_x$, $SiR^8R^9$ or $GeR^8R^9$ where x is 1 or 2, $R^8$ and $R^9$ are independently selected from hydrogen or substituted or unsubstituted hydrocarbyl, halocarbyl, silylcarbyl and germylcarbyl and $R^8$ and $R^9$ may optionally be bonded together to form a ring structure.
In at least one embodiment of the present disclosure, each $R^2$, $R^3$, $R^6$, and $R^7$ is independently hydrogen, or a $C_1$-$C_{50}$ substituted or unsubstituted hydrocarbyl, halocarbyl, silylcarbyl or germylcarbyl, preferably methyl, ethyl, propyl, butyl, pentyl, hexyl, heptyl, octyl, nonyl, decyl, undecyl, and dodecyl or an isomer thereof.
In at least one embodiment of the present disclosure, each $R^2$, $R^3$, $R^4$, and $R^7$ is independently hydrogen, or a $C_1$-$C_{50}$ substituted or unsubstituted hydrocarbyl, halocarbyl, silylcarbyl or germylcarbyl, preferably methyl, ethyl, propyl, butyl, pentyl, hexyl, heptyl, octyl, nonyl, decyl, undecyl, and dodecyl or an isomer thereof.
In at least one embodiment of the present disclosure, each $R^a$ or $R^d$ is independently selected from methyl, ethyl, propyl, butyl, pentyl, hexyl, heptyl, octyl, nonyl, decyl, and isomers thereof, preferably methyl and ethyl, preferably methyl.
In at least one embodiment of the present disclosure, each $R^b$, $R^c$, $R^e$ or $R^f$ is independently selected from hydrogen, methyl, ethyl, propyl, butyl, pentyl, hexyl, heptyl, octyl, nonyl, decyl, and isomers thereof, preferably hydrogen or methyl, preferably hydrogen.
In at least one embodiment of the present disclosure, each $R^a$ is independently selected from methyl, ethyl, propyl, butyl, pentyl, hexyl, heptyl, octyl, nonyl, decyl, and isomers thereof, preferably methyl and ethyl, preferably methyl, and each $R^b$ and $R^c$ are independently selected from hydrogen, methyl, ethyl, propyl, butyl, pentyl, hexyl, heptyl, octyl, nonyl, decyl, and isomers thereof, preferably hydrogen or methyl, preferably hydrogen.
In at least one embodiment of the present disclosure, each $R^d$ is independently selected from hydrogen, methyl, ethyl, propyl, butyl, pentyl, hexyl, heptyl, octyl, nonyl, decyl, and isomers thereof, preferably methyl and ethyl, preferably methyl, and each $R^e$ and $R^f$ are independently selected from hydrogen, methyl, ethyl, propyl, butyl, pentyl, hexyl, heptyl, octyl, nonyl, decyl, and isomers thereof, preferably hydrogen or methyl, preferably hydrogen.
In at least one embodiment of the present disclosure, each $R^a$, $R^b$ and $R^c$ are independently selected from hydrogen, methyl, ethyl, propyl, butyl, pentyl, hexyl, heptyl, octyl, nonyl, decyl, and isomers thereof, preferably hydrogen or methyl.
In at least one embodiment of the present disclosure, each $R^d$, $R^e$ and $R^f$ are independently selected from hydrogen, methyl, ethyl, propyl, butyl, pentyl, hexyl, heptyl, octyl, nonyl, decyl, and isomers thereof, preferably hydrogen or methyl.
In at least one embodiment of the present disclosure, R' is a $C_1$-$C_{100}$ substituted or unsubstituted hydrocarbyl, halocarbyl, or silylcarbyl, preferably methyl, ethyl, propyl, butyl, pentyl, hexyl, heptyl, octyl, nonyl, decyl, undecyl, dodecyl, phenyl or an isomer thereof, preferably t-butyl, neopentyl, cyclohexyl, cyclooctyl, cyclododecyl, adamantyl, or norbornyl.

In at least one embodiment of the present disclosure, T is $CR^8R^9$, $R^8R^9C-CR^8R^9$, $SiR^8R^9$ or $GeR^8R^9$ where $R^8$ and $R^9$ are independently selected from hydrogen or substituted or unsubstituted hydrocarbyl, halocarbyl, silylcarbyl and $R^8$ and $R^9$ may optionally be bonded together to form a ring structure, preferably each $R^8$ and $R^9$ is independently methyl, ethyl, propyl, butyl, pentyl, hexyl, heptyl, octyl, nonyl, decyl, benzyl, phenyl, methylphenyl or an isomer thereof, preferably methyl, ethyl, propyl, butyl, or hexyl. When $R^8$ and $R^9$ are optionally bonded together preferred bridges include substituted or unsubstituted phen-1,2-diyl, cyclohex-1,2-diyl, cyclopentamethylenesilylene, cyclotetramethylenesilylene, cyclotrimethylenesilylene and dibenzo[*b,d*]silolyl. Additionally, optionally any one or more adjacent $R^8$ and/or $R^9$ may join to form a substituted or unsubstituted, saturated, partially unsaturated or aromatic, cyclic or polycyclic substituent along with R'.

In at least one embodiment of the present disclosure, at least one of $R^8$ or $R^9$ is not aryl. In at least one embodiment of the present disclosure, $R^8$ is not aryl. In at least one embodiment of the present disclosure, $R^9$ is not aryl. In at least one embodiment of the present disclosure, $R^8$ and $R^9$ are not aryl.

In at least one embodiment of the present disclosure, $R^8$ and $R^9$ are independently $C_1$-$C_{10}$ alkyl, such as methyl, ethyl, propyl, butyl, pentyl, hexyl, heptyl, octyl, nonyl, decyl, or an isomer thereof.

In at least one embodiment of the present disclosure, each $R^2$, $R^3$, $R^4$, and $R^7$ is independently hydrogen or hydrocarbyl. Each $R^2$, $R^3$, $R^4$, and $R^7$ can be independently hydrogen or a $C_1$-$C_{10}$ alkyl, such as methyl, ethyl, propyl, butyl, pentyl, hexyl, heptyl, octyl, nonyl, decyl, or an isomer thereof.

In at least one embodiment of the present disclosure, each $R^2$, $R^3$, $R^6$, and $R^7$ is independently hydrogen or hydrocarbyl. Each $R^2$, $R^3$, $R^6$, and $R^7$ can be independently hydrogen or a $C_1$-$C_{10}$ alkyl, preferably methyl, ethyl, propyl, butyl, pentyl, hexyl, heptyl, octyl, nonyl, decyl, or an isomer thereof.

In at least one embodiment of the present disclosure, $R^2$ is a $C_1$-$C_{10}$ alkyl and $R^3$, $R^4$, and $R^7$ are hydrogen.

In at least one embodiment of the present disclosure, $R^2$ is a $C_1$-$C_{10}$ alkyl and $R^3$, $R^6$, and $R^7$ are hydrogen.

In at least one embodiment of the present disclosure, $R^2$, $R^3$, $R^4$, and $R^7$ are hydrogen. In at least one embodiment of the present disclosure, $R^2$, $R^3$, $R^6$, and $R^7$ are hydrogen.

In at least one embodiment of the present disclosure, $R^2$ is methyl, ethyl, or an isomer of propyl, butyl, pentyl or hexyl, and $R^3$, $R^4$, and $R^7$ are hydrogen. In at least one embodiment of the present disclosure, $R^2$ is methyl, ethyl, or an isomer of propyl, butyl, pentyl or hexyl, and $R^3$, $R^6$, and $R^7$ are hydrogen.

In at least one embodiment of the present disclosure, $R^2$ is methyl and $R^3$, $R^4$, and $R^7$ are hydrogen. In at least one embodiment of the present disclosure, $R^2$ is methyl and $R^3$, $R^6$, and $R^7$ are hydrogen.

In at least one embodiment of the present disclosure, $R^3$ is hydrogen. In at least one embodiment of the present disclosure, $R^2$ is hydrogen.

In at least one embodiment of the present disclosure, $R^2$ and each $R^a$ is independently a $C_1$-$C_{10}$ alkyl and $R^3$, $R^4$, $R^7$ and each $R^b$ and $R^c$ are hydrogen.

In at least one embodiment of the present disclosure, $R^2$ and each $R^d$ is a $C_1$-$C_{10}$ alkyl and $R^3$, $R^6$, $R^7$ and each $R^e$ and $R^f$ are hydrogen.

In at least one embodiment of the present disclosure, $R^2$ and each $R^a$ is independently a methyl, ethyl, propyl, butyl, pentyl, hexyl, heptyl, octyl, nonyl, decyl, or an isomer thereof, and $R^3$, $R^4$, $R^7$ and each $R^b$ and $R^c$ are hydrogen.

In at least one embodiment of the present disclosure, $R^2$ and each $R^d$ is a methyl, ethyl, propyl, butyl, pentyl, hexyl, heptyl, octyl, nonyl, decyl, or an isomer thereof, and $R^3$, $R^6$, $R^7$ and each $R^e$ and $R^f$ are hydrogen.

In at least one embodiment of the present disclosure, R' is $C_1$-$C_{100}$ or $C_1$-$C_{30}$ substituted or unsubstituted hydrocarbyl.

In at least one embodiment of the present disclosure, R' is $C_1$-$C_{30}$ substituted or unsubstituted alkyl (linear, branched, or cyclic), aryl, alkaryl, or heterocyclic group. In at least one embodiment of the present disclosure, R' is $C_1$-$C_{30}$ linear, branched or cyclic alkyl group.

In at least one embodiment of the present disclosure, R' is methyl, ethyl, or any isomer of propyl, butyl, pentyl, hexyl, heptyl, octyl, nonyl, decyl, undecyl, or dodecyl. In at least one embodiment of the present disclosure, R' is a cyclic or polycyclic hydrocarbyl.

In at least one embodiment of the present disclosure, R' is selected from tert-butyl, neopentyl, cyclohexyl, cycloheptyl, cyclooctyl, cyclononyl, cyclodecyl, cycloundecyl, cyclododecyl, adamantyl, and norbornyl. In at least one embodiment, R' is tert-butyl.

In at least one embodiment of the present disclosure, $R^i$ is selected from tert-butyl, neopentyl, cyclohexyl, cycloheptyl, cyclooctyl, cyclononyl, cyclodecyl, cycloundecyl, cyclododecyl, adamantyl, and norbornyl. In at least one embodiment, $R^i$ is tert-butyl.

In at least one embodiment of the present disclosure, T is selected from diphenylmethylene, dimethylmethylene, 1,2-ethylene, phen-1,2-diyl, cyclohex-1,2-diyl cyclotrimethylenesilylene, cyclotetramethylenesilylene, cyclopentamethylenesilylene, dibenzo[b,d]silolyl, dimethylsilylene, diethylsilylene, methylethylsilylene, and dipropylsilylene.

In at least one embodiment of the present disclosure, each $R^a$ is independently methyl, ethyl, propyl, butyl, pentyl or hexyl. In at least one embodiment of the present disclosure, each $R^a$ is independently methyl or ethyl. Each $R^a$ can be methyl.

In at least one embodiment of the present disclosure, each $R^d$ is independently methyl, ethyl, propyl, butyl, pentyl or hexyl. In at least one embodiment of the present disclosure, each $R^d$ is independently methyl or ethyl. Each $R^d$ can be methyl.

In at least one embodiment of the present disclosure, each $R^d$ and each $R^e$ and $R^f$ are independently hydrogen, methyl, ethyl, propyl, butyl, pentyl or hexyl. In at least one embodiment of the present disclosure, each $R^d$ is independently hydrogen, methyl, or ethyl.

In at least one embodiment of the present disclosure, each $R^b$ and $R^c$ is hydrogen. In at least one embodiment of the present disclosure, each $R^e$ and $R^f$ is hydrogen.

In at least one embodiment of the present disclosure, each X is hydrocarbyl, halocarbyl, or substituted hydrocarbyl or halocarbyl.

In at least one embodiment of the present disclosure, X is methyl, benzyl, or halo where halo includes fluoro, chloro, bromo and iodido.

In at least one embodiment of the present disclose, both X are joined together to form a $C_4$-$C_{20}$ diene ligand such as 1,3-butadiene, 1,3-pentadiene, 2-methyl-1,3-pentadiene, 2,4-dimethylpentadiene and the like.

In at least one embodiment of formula (II) of the present disclosure: 1) $R^3$ and/or $R^4$ are not aryl or substituted aryl, 2) $R^3$ is not directly bonded to a group 15 or 16 heteroatom, and 3) adjacent $R^4$, $R^c$, $R^a$, $R^b$, or $R^7$ do not join together to form a fused ring system, and 4) each $R^a$ is a $C_1$ to $C_{10}$ alkyl (preferably methyl, ethyl, propyl, butyl, pentyl, hexyl, heptyl, octyl, nonyl, decyl, or an isomer thereof).

In a preferred embodiment of the present disclosure, T of any of formulas (I)-(III) is represented by the formula $ER^g_2$ or $(ER^g_2)_2$, where E is C, Si, or Ge, and each $R^g$ is, independently, hydrogen, halogen, $C_1$ to $C_{20}$ hydrocarbyl (such as methyl, ethyl, propyl, butyl, pentyl, hexyl, heptyl, octyl, nonyl, decyl, undecyl, or dodecyl) or a $C_1$ to $C_{20}$ substituted hydrocarbyl, and two $R^g$ can form a cyclic structure including aromatic, partially saturated, or saturated cyclic or fused ring system. Preferably, T is a bridging group comprising carbon or silica, such as dialkylsilyl, preferably T is selected from $-CH_2-$, $-CH_2CH_2-$, $-C(CH_3)_2-$, $Si(Me)_2$, cyclotrimethylenesilylene ($-Si(CH_2)_3-$), cyclopentamethylenesilylene ($-Si(CH_2)_5-$) and cyclotetramethylenesilylene ($-Si(CH_2)_4-$).

In at least one embodiment, a catalyst compound is one or more of:

dimethylsilylene(2,6,6-trimethyl-1,5,6,7-tetrahydro-*s*-indacen-1-yl)(t-butylamido)$M(R)_2$;
dimethylsilylene(6,6-dimethyl-1,5,6,7-tetrahydro-*s*-indacen-1-yl)(t-butylamido)$M(R)_2$;
dimethylsilylene(2,7,7-trimethyl-3,6,7,8-tetrahydro-*as*-indacen-3-yl)(t-butylamido)$M(R)_2$;
dimethylsilylene(7,7-dimethyl-3,6,7,8-tetrahydro-*as*-indacen-3-yl)(t-butylamido)$M(R)_2$;
dimethylsilylene(2,6,6-trimethyl-1,5,6,7-tetrahydro-*s*-indacen-1-yl)(cyclododecylamido)$M(R)_2$;
dimethylsilylene(6,6-dimethyl-1,5,6,7-tetrahydro-*s*-indacen-1-yl)(cyclododecylamido)$M(R)_2$; dimethylsilylene(2,7,7-trimethyl-3,6,7,8-tetrahydro-*as*-indacen-3-yl)(cyclododecylamido)$M(R)_2$;
dimethylsilylene(7,7-dimethyl-3,6,7,8-tetrahydro-*as*-indacen-3-yl)(cyclododecylamido)$M(R)_2$;
dimethylsilylene(2,6,6-trimethyl-1,5,6,7-tetrahydro-*s*-indacen-1-yl)(cyclohexylamido)$M(R)_2$;
dimethylsilylene(6,6-dimethyl-1,5,6,7-tetrahydro-*s*-indacen-1-yl)(cyclohexylamido)$M(R)_2$;
dimethylsilylene(2,7,7-trimethyl-3,6,7,8-tetrahydro-*as*-indacen-3-yl)(cyclohexylamido)$M(R)_2$;
dimethylsilylene(7,7-dimethyl-3,6,7,8-tetrahydro-*as*-indacen-3-yl)(cyclohexylamido)$M(R)_2$;
dimethylsilylene(2,6,6-trimethyl-1,5,6,7-tetrahydro-*s*-indacen-1-yl)(adamantylamido)$M(R)_2$;
dimethylsilylene(6,6-dimethyl-1,5,6,7-tetrahydro-*s*-indacen-1-yl)(adamantylamido)$M(R)_2$;
dimethylsilylene(2,7,7-trimethyl-3,6,7,8-tetrahydro-*as*-indacen-3-yl)(adamantylamido)$M(R)_2$;
dimethylsilylene(7,7-dimethyl-3,6,7,8-tetrahydro-*as*-indacen-3-yl)(adamantylamido)$M(R)_2$;
dimethylsilylene(2,6,6-trimethyl-1,5,6,7-tetrahydro-*s*-indacen-1-yl)(neopentylamido)$M(R)_2$;
dimethylsilylene(6,6-dimethyl-1,5,6,7-tetrahydro-*s*-indacen-1-yl)(neopentylamido)$M(R)_2$;
dimethylsilylene(2,7,7-trimethyl-3,6,7,8-tetrahydro-*as*-indacen-3-yl)(neopentylamido)$M(R)_2$;
dimethylsilylene(7,7-dimethyl-3,6,7,8-tetrahydro-*as*-indacen-3-yl)(neopentylamido)$M(R)_2$;
dimethylsilylene(2-methyl-6,6-diethyl-1,5,6,7-tetrahydro-*s*-indacen-1-yl)(t-butylamido)$M(R)_2$;
dimethylsilylene(6,6-diethyl-1,5,6,7-tetrahydro-*s*-indacen-1-yl)(t-butylamido)$M(R)_2$;
dimethylsilylene(2-methyl-7,7-diethyl-3,6,7,8-tetrahydro-*as*-indacen-3-yl)(t-butylamido)$M(R)_2$;
dimethylsilylene(7,7-diethyl-3,6,7,8-tetrahydro-*as*-indacen-3-yl)(t-butylamido)$M(R)_2$;
dimethylsilylene(2-methyl-6,6-diethyl-1,5,6,7-tetrahydro-*s*-indacen-1-yl)(cyclododecylamido)$M(R)_2$;
dimethylsilylene(6,6-diethyl-1,5,6,7-tetrahydro-*s*-indacen-1-yl)(cyclododecylamido)$M(R)_2$;
dimethylsilylene(2-methyl-7,7-diethyl-3,6,7,8-tetrahydro-*as*-indacen-3-yl)(cyclododecylamido)$M(R)_2$;
dimethylsilylene(7,7-dimethyl-3,6,7,8-tetrahydro-*as*-indacen-3-yl)(cyclododecylamido)$M(R)_2$;
diethylsilylene(2,6,6-trimethyl-1,5,6,7-tetrahydro-*s*-indacen-1-yl)(t-butylamido)$M(R)_2$;
diethylsilylene(6,6-dimethyl-1,5,6,7-tetrahydro-*s*-indacen-1-yl)(t-butylamido)$M(R)_2$;
diethylsilylene(2,7,7-trimethyl-3,6,7,8-tetrahydro-*as*-indacen-3-yl)(t-butylamido)$M(R)_2$;

diethylsilylene(7,7-dimethyl-3,6,7,8-tetrahydro-*as*-indacen-3-yl)(t-butylamido)$M(R)_2$;
dimethylsilylene(2-methyl-3,6,7,8-tetrahydro-*as*-indacen-3-yl)(cyclohexylamido)$M(R)_2$;
dimethylsilylene(2-methyl-3,6,7,8-tetrahydro-*as*-indacen-3-yl)(cyclododecylamido)$M(R)_2$;
dimethylsilylene(2-methyl-3,6,7,8-tetrahydro-*as*-indacen-3-yl)(adamantylamido)$M(R)_2$; and
dimethylsilylene(2-methyl-3,6,7,8-tetrahydro-*as*-indacen-3-yl)(t-butylamido)$M(R)_2$,
where M is selected from Ti, Zr, and Hf and R is selected from halogen or $C_1$ to $C_5$ alkyl, preferably R is a methyl group or a halogen group, preferably M is Ti.

In alternative embodiments, a catalyst system can include two or more different transition metal compounds. For purposes of the present disclosure one transition metal compound is considered different from another if they differ by at least one atom. For example "$Me_2Si$(2,7,7-$Me_3$-3,6,7,8-tetrahydro-*as*-indacen-3-yl)(cyclohexylamido)$TiCl_2$" is different from $Me_2Si$(2,7,7-$Me_3$-3,6,7,8-tetrahydro-*as*-indacen-3-yl)(n-butylamido)$TiCl_2$" which is different from $Me_2Si$(2,7,7-$Me_3$-3,6,7,8-tetrahydro-*as*-indacen-3-yl)(n-butylamido)$HfCl_2$.

In some embodiments, formulae I through III are referred to as mono-tetrahydroindacenyl compounds, precatalysts and/or catalysts.

In at least one embodiment, one mono-tetrahydroindacenyl compound as described herein is used in the catalyst system.

## Activators

The terms "cocatalyst" and "activator" are used herein interchangeably and include a compound which can activate any one of the catalyst compounds described above by converting the neutral catalyst compound to a catalytically active catalyst compound cation. Non-limiting activators, for example, include alumoxanes, aluminum alkyls, ionizing activators, which may be neutral or ionic, and conventional-type cocatalysts. Preferred activators typically include non-coordinating anion compounds, alumoxane compounds, modified alumoxane compounds, and ionizing anion precursor compounds that abstract a reactive, σ-bound, metal ligand making the metal complex cationic and providing a charge-balancing noncoordinating or weakly coordinating anion.

### Alumoxane Activators

Alumoxane activators are utilized as activators in the catalyst systems described herein. Alumoxanes are generally oligomeric compounds containing -Al($R^1$)-O- sub-units, where $R^1$ is an alkyl group. Examples of alumoxanes include methylalumoxane (MAO), modified methylalumoxane (MMAO), ethylalumoxane and isobutylalumoxane. Alkylalumoxanes and modified alkylalumoxanes are suitable as catalyst activators, particularly when the abstractable ligand is an alkyl, halide, alkoxide or amide. Mixtures of different alumoxanes and modified alumoxanes may also be used. It may be preferable to use a visually clear methylalumoxane. A cloudy or gelled alumoxane can be filtered to produce a clear solution or clear alumoxane can be decanted from the cloudy solution. A useful alumoxane is a modified methyl alumoxane (MMAO) cocatalyst type 3A (commercially available from Akzo Chemicals, Inc. under the trade name Modified Methylalumoxane type 3A, covered under patent number U.S. Patent No. 5,041,584).

When the activator is an alumoxane (modified or unmodified), some embodiments select the maximum amount of activator typically at up to a 5000-fold molar excess Al/M over the catalyst compound (per metal catalytic site). The minimum activator-to-catalyst-compound is a 1:1 molar ratio. Alternate preferred ranges include from 1:1 to 500:1, alternately from 1:1 to 200:1, alternately from 1:1 to 100:1, or alternately from 1:1 to 50:1.

### Non Coordinating Anion Activators

Non-coordinating anion activators may also be used herein. The term "non-coordinating anion" (NCA) means an anion which either does not coordinate to a cation or which is only weakly coordinated to a cation thereby remaining sufficiently labile to be displaced by a neutral Lewis base. "Compatible" non-coordinating anions are those which are not degraded to neutrality when the initially formed complex decomposes. Further, the anion will not transfer an anionic substituent or fragment to the cation so as to cause it to form a neutral transition metal compound and a neutral by-product from the anion. Non-coordinating anions useful in accordance with the present disclosure are those that are compatible, stabilize the transition metal cation in the sense of balancing its ionic charge at +1, and yet retain sufficient lability to permit displacement during polymerization.

It is within the scope of the present disclosure to use an ionizing activator, neutral or ionic, such as tri (n-butyl) ammonium tetrakis (pentafluorophenyl) borate, N,N-dimethylanilinium tetrakis(pentafluorophenyl)borate, N-dimethylanilinium tetrakis(perfluoronaphthyl)borate, a tris perfluorophenyl boron metalloid precursor or a tris perfluoronaphthyl boron metalloid precursor, polyhalogenated heteroborane anions (WO 98/43983), boric acid (U.S. Patent No. 5,942,459),

alone or in combination with the alumoxane or modified alumoxane activators. It is also within the scope of the present disclosure to use neutral or ionic activators in combination with the alumoxane or modified alumoxane activators.

The catalyst systems of the present disclosure can include at least one non-coordinating anion (NCA) activator. Specifically the catalyst systems may include NCAs which either do not coordinate to a cation or which only weakly coordinate to a cation thereby remaining sufficiently labile to be displaced during polymerization.

In a preferred embodiment boron containing NCA activators represented by the formula below can be used:

$$Z_d^+ (A^{d-})$$

where: Z is (L-H) or a reducible Lewis acid; L is a neutral Lewis base; H is hydrogen; (L-H) is a Bronsted acid; $A^{d-}$ is a boron containing non-coordinating anion having the charge d-; d is 1, 2, or 3.

The cation component, $Z_d^+$ may include Bronsted acids such as protons or protonated Lewis bases or reducible Lewis acids capable of protonating or abstracting a moiety, such as an alkyl or aryl, from the bulky ligand metallocene containing transition metal catalyst precursor, resulting in a cationic transition metal species.

The activating cation $Z_d^+$ may also be a moiety such as silver, tropylium, carboniums, ferroceniums and mixtures, preferably carboniums and ferroceniums. Most preferably $Z_d^+$ is triphenyl carbonium. Preferred reducible Lewis acids can be any triaryl carbonium (where the aryl can be substituted or unsubstituted, such as those represented by the formula: ($Ar_3C^+$), where Ar is aryl or aryl substituted with a heteroatom, a $C_1$ to $C_{40}$ hydrocarbyl, or a substituted $C_1$ to $C_{40}$ hydrocarbyl), preferably the reducible Lewis acids as "Z" include those represented by the formula: ($Ph_3C$), where Ph is a substituted or unsubstituted phenyl, preferably substituted with $C_1$ to $C_{40}$ hydrocarbyls or substituted a $C_1$ to $C_{40}$ hydrocarbyls, preferably $C_1$ to $C_{20}$ alkyls or aromatics or substituted $C_1$ to $C_{20}$ alkyls or aromatics, preferably Z is a triphenylcarbonium.

When $Z_d^+$ is the activating cation $(L\text{-}H)_d^+$, it is preferably a Bronsted acid, capable of donating a proton to the transition metal catalytic precursor resulting in a transition metal cation, including ammoniums, oxoniums, phosphoniums, silyliums, and mixtures thereof, preferably ammoniums of methylamine, aniline, dimethylamine, diethylamine, N-methylaniline, diphenylamine, trimethylamine, triethylamine, N,N-dimethylaniline, methyldiphenylamine, pyridine, p-bromo N,N-dimethylaniline, p-nitro-N,N-dimethylaniline, phosphoniums from triethylphosphine, triphenylphosphine, and diphenylphosphine, oxomiuns from ethers such as dimethyl ether diethyl ether, tetrahydrofuran and dioxane, sulfoniums from thioethers, such as diethyl thioethers, tetrahydrothiophene, and mixtures thereof.

The anion component $A^{d-}$ includes those having the formula $[M^{k+}Q_n]^{d-}$ wherein k is 1, 2, or 3; n is 1, 2, 3, 4, 5, or 6 (preferably 1, 2, 3, or 4); n - k = d; M is an element selected from group 13 of the Periodic Table of the Elements, preferably boron or aluminum, and Q is independently a hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 20 carbon atoms with the proviso that in not more than 1 occurrence is Q a halide. Preferably, each Q is a fluorinated hydrocarbyl group having 1 to 20 carbon atoms, more preferably each Q is a fluorinated aryl group, and most preferably each Q is a pentafluoryl aryl group. Examples of suitable $A^{d-}$ also include diboron compounds as disclosed in U.S. Patent No. 5,447,895.

Illustrative, but not limiting examples of boron compounds which may be used as an activating cocatalyst are the compounds described as (and particularly those specifically listed as) activators in US 8,658,556.

Most preferably, the ionic activator $Z_d^+ (A^{d-})$ is one or more of N,N-dimethylanilinium tetrakis(pentafluorophenyl) borate, N,N-dimethylanilinium tetrakis(perfluoronaphthyl)borate, N,N-dimethylanilinium tetrakis(perfluorobiphenyl)borate, N,N-dimethylanilinium tetrakis(3,5-bis(trifluoromethyl)phenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate, or triphenylcarbenium tetra(perfluorophenyl)borate.

Bulky activators are also useful herein as NCAs. "Bulky activator" as used herein refers to anionic activators represented by the formula:

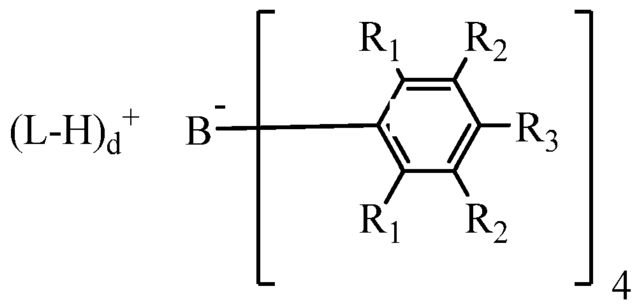

or

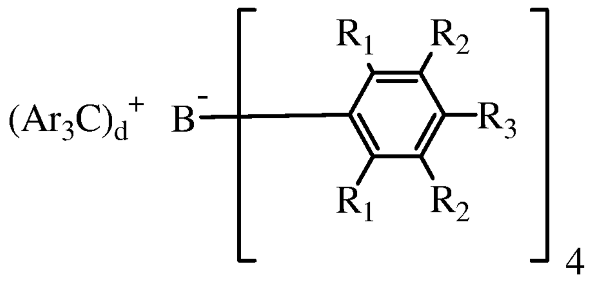

where: each $R_1$ is, independently, a halide, preferably a fluoride; Ar is substituted or unsubstituted aryl group (preferably a substituted or unsubstituted phenyl), preferably substituted with $C_1$ to $C_{40}$ hydrocarbyls, preferably $C_1$ to $C_{20}$ alkyls or aromatics; each $R_2$ is, independently, a halide, a $C_6$ to $C_{20}$ substituted aromatic hydrocarbyl group or a siloxy group of the formula -O-Si-$R_a$, where $R^a$ is a $C_1$ to $C_{20}$ hydrocarbyl or hydrocarbylsilyl group (preferably $R_2$ is a fluoride or a perfluorinated phenyl group); each $R_3$ is a halide, $C_6$ to $C_{20}$ substituted aromatic hydrocarbyl group or a siloxy group of the formula -O-Si-$R_a$, where $R_a$ is a $C_1$ to $C_{20}$ hydrocarbyl or hydrocarbylsilyl group (preferably $R_3$ is a fluoride or a $C_6$ perfluorinated aromatic hydrocarbyl group); wherein $R_2$ and $R_3$ can form one or more saturated or unsaturated, substituted or unsubstituted rings (preferably $R_2$ and $R_3$ form a perfluorinated phenyl ring); and L is an neutral Lewis base; $(L-H)^+$ is a Bronsted acid; d is 1, 2, or 3; wherein the anion has a molecular weight of greater than 1020 g/mol; wherein at least three of the substituents on the B atom each have a molecular volume of greater than 250 cubic Å, alternately greater than 300 cubic Å, or alternately greater than 500 cubic Å.

Preferably $(Ar_3C)_d^+$ is $(Ph_3C)_d^+$, where Ph is a substituted or unsubstituted phenyl, preferably substituted with $C_1$ to $C_{40}$ hydrocarbyls or substituted $C_1$ to $C_{40}$ hydrocarbyls, preferably $C_1$ to $C_{20}$ alkyls or aromatics or substituted $C_1$ to $C_{20}$ alkyls or aromatics.

"Molecular volume" is used herein as an approximation of spatial steric bulk of an activator molecule in solution. Comparison of substituents with differing molecular volumes allows the substituent with the smaller molecular volume to be considered "less bulky" in comparison to the substituent with the larger molecular volume. Conversely, a substituent with a larger molecular volume may be considered "more bulky" than a substituent with a smaller molecular volume.

Molecular volume may be calculated as reported in "A Simple "Back of the Envelope" Method for Estimating the Densities and Molecular Volumes of Liquids and Solids," Journal of Chemical Education, Vol. 71, No. 11, November 1994, pp. 962-964. Molecular volume (MV), in units of cubic Å, is calculated using the formula: $MV = 8.3V_s$, where $V_s$ is the scaled volume. $V_s$ is the sum of the relative volumes of the constituent atoms, and is calculated from the molecular formula of the substituent using the following table of relative volumes. For fused rings, the $V_s$ is decreased by 7.5% per fused ring.

| Element | Relative Volume |
|---|---|
| H | 1 |
| 1st short period, Li to F | 2 |
| 2nd short period, Na to Cl | 4 |
| 1st long period, K to Br | 5 |
| 2nd long period, Rb to I | 7.5 |
| 3rd long period, Cs to Bi | 9 |

For a list of particularly useful Bulky activators please see US 8,658,556.

In another embodiment, one or more of the NCA activators is chosen from the activators described in U.S. Patent No. 6,211,105.

Preferred activators include N,N-dimethylanilinium tetrakis(perfluoronaphthyl)borate, N,N-dimethylanilinium tetrakis(perfluorobiphenyl)borate, N,N-dimethylanilinium tetrakis(perfluorophenyl)borate, N,N-dimethylanilinium tetrakis(3,5-bis(trifluoromethyl)phenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate, triphenylcarbenium tetrakis(perfluorophenyl)borate, $Me_3NH^+][B(C_6F_5)_4^-]$; 1-(4-(tris(pentafluorophenyl)borate)-2,3,5,6-tetrafluorophenyl) pyrrolidinium; and tetrakis(pentafluorophenyl)borate, and 4-(tris(pentafluorophenyl)borate)-2,3,5,6-tetrafluoropyridine.

In at least one embodiment, the activator comprises a triaryl carbonium (such as triphenylcarbenium tetraphenylborate, triphenylcarbenium tetrakis(pentafluorophenyl)borate, triphenylcarbenium tetrakis-(2,3,4,6-tetrafluorophenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate).

In another embodiment, the activator comprises one or more of trialkylammonium tetrakis(pentafluorophenyl) borate, N,N-dialkylanilinium tetrakis(pentafluorophenyl)borate, N,N-dimethyl-(2,4,6-trimethylanilinium) tetrakis(pentafluorophenyl)borate, trialkylammonium tetrakis-(2,3,4,6-tetrafluorophenyl) borate, N,N-dialkylanilinium tetrakis-(2,3,4,6-tetrafluorophenyl)borate, trialkylammonium tetrakis(perfluoronaphthyl)borate, N,N-dialkylanilinium tetrakis(perfluoronaphthyl)borate, trialkylammonium tetrakis(perfluorobiphenyl)borate, N,N-dialkylanilinium tetrakis(perfluorobiphenyl) borate, trialkylammonium tetrakis(3,5-bis(trifluoromethyl)phenyl)borate, N,N-dialkylanilinium tetrakis(3,5-bis(trifluoromethyl)phenyl)borate, N,N-dialkyl-(2,4,6-trimethylanilinium) tetrakis(3,5-bis(trifluoromethyl)phenyl)borate, di-(i-propyl) ammonium tetrakis(pentafluorophenyl)borate, (where alkyl is methyl, ethyl, propyl, n-butyl, sec-butyl, or t-butyl).

In preferred embodiments of the invention, N,N-dimethylanilinium tetrakis(perfluoronaphthyl)borate is the preferred activator.

The typical NCA activator-to-catalyst ratio, e.g., all NCA activators-to-catalyst ratio is about a 1:1 molar ratio. Alternate preferred ranges include from 0.1:1 to 100:1, alternately from 0.5:1 to 200:1, alternately from 1:1 to 500:1 alternately from 1:1 to 1000:1. A particularly useful range is from 0.5:1 to 10:1, preferably 1:1 to 5:1.

Activators useful herein also include those described in US 7,247,687 at column 169, line 50 to column 174, line 43, particularly column 172, line 24 to column 173, line 53.

It is also within the scope of the present disclosure that the catalyst compounds can be combined with combinations of alumoxanes and NCA's (see for example, US 5,153,157, US 5,453,410, EP 0 573 120 B1, WO 94/07928, and WO 95/14044 which discuss the use of an alumoxane in combination with an ionizing activator).

Optional Scavengers or Co-Activators

In addition to the activator compounds, scavengers, chain transfer agents or co-activators may be used. Aluminum alkyl or organoaluminum compounds which may be utilized as scavengers or co-activators include, for example, trimethylaluminum, triethylaluminum, triisobutylaluminum, tri-n-hexylaluminum, tri-n-octylaluminum, and diethyl zinc.

Useful chain transfer agents that may also be used herein are typically a compound represented by the formula $AlR_3$, $ZnR_2$ (where each R is, independently, a $C_1$-$C_8$ aliphatic radical, preferably methyl, ethyl, propyl, butyl, pentyl, hexyl octyl or an isomer thereof) or a combination thereof, such as diethyl zinc, trimethylaluminum, triisobutylaluminum, trioctylaluminum, or a combination thereof.

In some embodiments, the catalyst compounds described herein may be supported (with or without an activator) by any method effective to support other coordination catalyst systems, effective meaning that the catalyst so prepared can be used for oligomerizing or polymerizing olefin in a heterogeneous process. The catalyst precursor, activator, co-activator if needed, suitable solvent, and support may be added in any order or simultaneously. Typically, the complex and activator may be combined in solvent to form a solution. Then the support is added, and the mixture is stirred for 1 minute to 10 hours. The total solution volume may be greater than the pore volume of the support, but some embodiments limit the total solution volume below that needed to form a gel or slurry (about 90% to 400%, preferably about 100-200% of the pore volume). After stirring, the residual solvent is removed under vacuum, typically at ambient temperature and over 10-16 hours. But greater or lesser times and temperatures are possible.

The complex may also be supported absent the activator; in that case, the activator (and co-activator if needed) is added to a polymerization process's liquid phase. Additionally, two or more different complexes may be supported on the same support. Likewise, two or more activators or an activator and co-activator may be supported on the same support.

Suitable solid particle supports are typically comprised of polymeric or refractory oxide materials, each being preferably porous. A support material can have an average particle size greater than 10 μm for use in embodiments of the present disclosure. VA support material can be a porous support material, such as, talc, inorganic oxides, inorganic chlorides, for example magnesium chloride and resinous support materials such as polystyrene polyolefin or polymeric compounds or any other organic support material and the like. A support material can be an inorganic oxide material including group-2, -3, -4, -5, -13, or -14 metal or metalloid oxides. A catalyst support materials can be silica, alumina, silica-alumina, and their mixtures. Other inorganic oxides may serve either alone or in combination with the silica, alumina, or silica-alumina. These are magnesia, titania, zirconia, and the like. Lewis acidic materials such as montmorillonite and similar clays may also serve as a support. In this case, the support can optionally double as the activator component, however, an additional activator may also be used.

The support material may be pretreated by any number of methods. For example, inorganic oxides may be calcined, chemically treated with dehydroxylating agents such as aluminum alkyls and the like, or both.

As stated above, polymeric carriers will also be suitable in accordance with the present disclosure, see for example the descriptions in WO 95/15815 and US 5,427,991. The methods disclosed may be used with the catalyst complexes, activators or catalyst systems of the present disclosure to adsorb or absorb them on the polymeric supports,

particularly if made up of porous particles, or may be chemically bound through functional groups bound to or in the polymer chains.

Useful supports typically have a surface area of from 10-700 $m^2/g$, a pore volume of 0.1-4.0 cc/g and an average particle size of 10-500 μm. Some embodiments select a surface area of 50-500 $m^2/g$, a pore volume of 0.5-3.5 cc/g, or an average particle size of 20-200 μm. Other embodiments select a surface area of 100-400 $m^2/g$, a pore volume of 0.8-3.0 cc/g, and an average particle size of 30-100 μm. Useful supports typically have a pore size of 10-1000 Angstroms, alternatively 50-500 Angstroms, or 75-350 Angstroms.

The catalyst complexes described herein are generally deposited on the support at a loading level of 10-100 micromoles of complex per gram of solid support; alternately 20-80 micromoles of complex per gram of solid support; or 40-60 micromoles of complex per gram of support. But greater or lesser values may be used provided that the total amount of solid complex does not exceed the support's pore volume.

In an alternative embodiment, catalyst complexes and catalyst systems described herein may be present on a fluorided support, e.g. a support, desirably particulate and porous, which has been treated with at least one inorganic fluorine containing compound. For example, the fluorided support composition can be a silicon dioxide support wherein a portion of the silica hydroxyl groups has been replaced with fluorine or fluorine containing compounds. For example, a useful support herein, is a silica support treated with ammonium hexafluorosilicate and/or ammonium tetrafluoroborate fluorine compounds. Typically the fluorine concentration present on the support is in the range of from 0.1 to 25 wt%, alternately 0.19 to 19 wt%, alternately from 0.6 to 3.5 wt %, based upon the weight of the support.

In an embodiment of the present disclosure, the catalyst system comprises fluorided silica, alkylalumoxane activator, and the bridged monocyclopentadienyl group 4 transition metal compound, where the fluorided support has not been calcined at a temperature of 400°C or more.

The catalyst compound may be present on a support at 1 to 100 μmol/g supported catalyst, preferably 20-60 μmol/g supported catalyst.

The present disclosure also relates to metallocene catalyst systems comprising the reaction product of at least three components: (1) one or more bridged metallocenes having one tetrahydroindacenyl group; (2) one or more alkylalumoxane or NCA activator; and (3) one or more fluorided support compositions, where the fluorided support composition has not been calcined at 400 °C or more, preferably the fluorided support composition has been calcined at a temperature of 100°C to 395°C, alternately 125°C to 350°C, alternately 150°C to 300°C).

Typically, the fluorided supports described herein are prepared by combining a solution of polar solvent (such as water) and fluorinating agent (such as $SiF_4$ or $(NH_4)_2SiF_6$) with a slurry of support (such as a toluene slurry of silica), then drying until it is free flowing, and optionally, calcining (typically at temperatures over 100°C for at least 1 hour). The supports are then combined with activator(s) and catalyst compound (separately or together).

For more information on fluorided supports and methods to prepare them, please see USSN 62/149,799, filed April 20, 2015 (and all cases claiming priority to or the benefit of USSN 62/149,799); USSN 62/103372, filed January 14, 2015 (and all cases claiming priority to or the benefit of USSN 62/103372); and PCT/US2015/067582, filed December 28, 2015.

As described above, rubber compounds of the present disclosure may further include one or more additives (e.g., curatives, crosslinking agents, fillers, process oils, plasticizers, compatibilizers, crosslinkers, and the like).

Curative (e.g., crosslinking agents or vulcanizing agents) can be present in a composition. Suitable vulcanization activators include, but are not limited to, zinc oxide, stearic acid, and the like. These activators may be mixed in amounts ranging from 0.1 phr to 20 phr. Different vulcanization activators may be present in different amounts. For instance, where the vulcanization activator includes zinc oxide, the zinc oxide may be present in an amount from 1 phr to 20 phr, or from 2.5 phr to 10 phr, or about 5 phr, while stearic acid may preferably be employed in amounts ranging from 0.1 phr to 5 phr, or 0.1 phr to 2 phr, or about 1.5 phr.

Any suitable vulcanizing agent known in the art may be used. Of particular note are curing agents as described in Col. 19, line 35 to Col. 20, line 30 of U.S. Patent No. 7,915,354, (e.g., sulfur, peroxide-based curing agents (e.g., VULCUP™ 40 KE available from Arkema of Colombes, France), resin curing agents, silanes, and hydrosilane curing agents). Other examples include phenolic resin curing agents (e.g., as described in U.S. Patent No. 5,750,625). Cure co-agents may also be included (e.g., zinc dimethacrylate (ZDMA) (DYMALINK™ 708, available from Cray Valley) or those described in the description of U.S. Patent No. 7,915,354).

Further additives may be chosen from any known additives useful for rubber compounds described herein include, but are not limited to , one or more of:

- Process oil, such as paraffinic and/or isoparaffinic process oil (examples including SUNPAR™ 2280 (available from HollyFrontier Refining & Marketing LLC, Tulsa, Oklahoma); as well as FLEXON™ 876, CORE™ 600 base stock oil, FLEXON™ 815, and CORE™ 2500 base stock oil, available from ExxonMobil Chemical Company, Baytown, Texas). In any embodiments where color of the end product may be important, a white oil (e.g., API Group II or Group III base oil) may be used as process oil. Examples include paraffinic and/or isoparaffinic oils with low (under 1 wt%, preferably

under 0.1 wt%) aromatic and heteroatom content. Compositions of the present disclosure may comprise process oil from 1 phr to 150 phr, or 50 phr to 100 phr, or 60 phr to 80 phr, or, for sponge grades, from 50 phr to 200 phr, or 70 phr to 150 phr, or 80 phr to 100 phr, and preferred process oils have viscosity at 40°C from 80 CSt to 600 CSt;

- Vulcanization accelerators: compositions of the present disclosure can comprise 0.1 phr to 15 phr, or 1 phr to 5 phr, or 2 phr to 4 phr, with examples including thiazoles such as 2-mercaptobenzothiazole or mercaptobenzothiazyl disulfide (MBTS); guanidines such as diphenylguanidine; sulfenamides such as N-cyclohexylbenzothiazolsulfenamide; dithiocarbamates such as zinc dimethyl dithiocarbamate, zinc diethyl dithiocarbamate, zinc dibenzyl dithiocarbamate (ZBEC); and zinc dibutyldithiocarbamate, thioureas such as 1,3-diethylthiourea, thiophosphates and others;
- Processing aids (e.g., polyethylene glycol or zinc soap);
- Carbon black (e.g., having particle size from 20 nm to 600 nm and structure having DBPA (dibutyl phthalate absorption number) within the range from 0 to 150, as measured by the DBP method). Compositions of the present disclosure may comprise carbon black from 1 phr to 500 phr, preferably from 1 phr to 200 phr, or from 50 phr to 150 phr;
- Mineral fillers (talc, calcium carbonate, clay, silica, aluminum trihydrate, and the like), which may be present in the composition from 1 phr to 200 phr, preferably from 20 phr to 100 phr, or from 30 phr to 60 phr;
- Where foaming may be desired, sponge or foaming grade additives, such as foaming agent or blowing agent, particularly in very high Mooney viscosity embodiments, such as those suitable for sponge grades. Examples of such agents include: azodicarbonamide (ADC), ortho-benzo sulfonyl hydrazide (OBSH), p-toluenesulfonylhydrazide (TSH), 5-phenyltetrazole (5-PT), and sodium bicarbonate in citric acid. Microcapsules may also or instead be used for such foaming applications. These may include a thermo-expandable microsphere comprising a polymer shell with a propellant contained therein. Examples are known in the art and described in, for example, U.S. Patent Nos. 6,582,633 and 3,615,972, WIPO Publication Nos. WO 99/46320 and WO 99/43758. Examples of such thermo-expandable microspheres include EXPANCEL™
  products commercially available from Akzo Nobel N.V., and ADVANCELL™ products available from Sekisui. In other embodiments, sponging or foaming may be accomplished by direct injection of gas and/or liquid (e.g., water, $CO_2$, $N_2$) into the rubber in an extruder, for foaming after passing the composition through a die; and
- Various other additives may also be included, such as antioxidants (e.g., 1,2-dihydro-2,2,4-trimethylquinoline), stabilizers, anticorrosion agents, UV absorbers, antistatics, slip agents, moisture absorbents (e.g., calcium oxide), pigments, dyes or other colorants.

The rubber compounds of the present disclosure may be characterized by Picma tack. Picma tack is a measure of the tack between two surfaces. Generally, two unvulcanized calendered rubber sheets are kept in contact under constant load for a specified time. The force required to pull the sheets apart is measured as tack. Unless otherwise specified the two layers of uncured rubber are the same composition. Herein, a Picma Tack Tester, Type PI (available from Toyoseiki) having a measurement range from 0.1 N to 15 N in 0.1 N steps was used. The sheets were prepared by roll milling at 80°C and the nip-gap is adjusted to achieve a sheet of 2.0 mm ± 0.1 mm. A first sheet was secured to a cylinder weight sample holder, and the sample in which the first sheet contacted was a second sheet. The contact time was 30 seconds, the rate of extension was 25 mm/min, and the applied dead weight was 500 gram-force (4.9 N). The measurements were performed at 23°C.

The rubber compounds of the present disclosure may have a Picma tack of 1.3 kgf or greater, or 1.3 kgf to 2.0 kgf, or 1.4 kgf to 1.7 kgf.

The change in elastic modulus ($\Delta G'$) as a function of strain (i.e., G' at 0.1% strain and G' at 100% strain ($\Delta G' = G'_{0.1} - G'_{100}$)) can also be used to characterize the rubber compounds of the present disclosure that include fillers. $\Delta G'$ provides an indication of how well fillers are incorporated into rubber compounds. The elastic modulus was measured herein at 100°C and 0.5 Hz frequency with a Rubber Processing Analyzer (RPA) 2000, available from Alpha Technologies Co.

With a carbon black load of 55 phr ± 15 phr, the rubber compounds of the present disclosure may have a $\Delta G'$ of 0.4 Pa or less, or 0.3 Pa to 0.4 Pa, or 0.35 Pa to 0.4 Pa.

## Preparing Rubber Compounds

Rubber compounds of the present disclosure may be formed by combining the rubber, PE(D)M, and additives using any suitable method known in the rubber compounding art or rubber blending art.

For example, the method of compounding the polymers may be to melt-blend the rubber and the PE(D)M in a batch mixer, such as a BANBURY™ or BARBENDER™ mixer. In another example, compounding may include melt blending the rubber and the PE(D)M polymer in an extruder, such as a single-screw extruder or a twin-screw extruder. Extrusion technology for polymer blends is well known in the art, and is described in more detail in, for example, PLASTICS EXTRUSION TECHNOLOGY, F. Hensen, Ed. (Hanser, 1988), pp. 26-37, and in POLYPROPYLENE HANDBOOK, E. P. Moore, Jr. Ed. (Hanser, 1996), pp. 304-348.

The rubber and the PE(D)M polymer may also be blended or compounded by a combination of methods

including, but not limited to, solution blending, melt mixing, compounding in a shear mixer, and the like, and combinations thereof. For example, dry blending followed by melt blending in an extruder, or batch mixing of some components followed by melt blending with other components in an extruder. The rubber and the PE(D)M polymer may also be blended using a double-cone blender, ribbon blender, or other suitable blender, or in a Farrel Continuous Mixer (FCM™).

The rubber, the PE(D)M polymer, and additives (e.g., curatives, crosslinking agents, fillers, process oils, plasticizers, compatibilizers, crosslinkers, and the like) may be blended in varying orders, which in some instances may alter the properties of the resultant composition.

In some instances, a master batch that comprises the rubber, the PE(D)M polymer, and additives (except curatives and crosslinking agents) may be produced at a first temperature. Then, the curatives and/or crosslinking agents may be mixed into the master batch at a second temperature that is lower than the first temperature.

The master batch may be produced by mixing together in one step the rubber, the PE(D)M polymer, and the additives (except curatives and crosslinking agents) until the additives are incorporated (e.g., producing a homogeneous blend). This is referred to herein as a first pass method or first pass blending. After the first pass blending produces the master batch, the curatives and/or crosslinking agents may be mixed into the master batch to produce the final blend.

Alternatively, a two-step mixing process may be used to produce the master batch. For example, the master batch may be produced by mixing the rubber with the additives (except curatives and crosslinking agents) until the additives are incorporated into the rubber (e.g., producing a homogeneous blend). Then, the resultant blend is mixed with the PE(D)M and the curatives and/or crosslinking agents. This is referred to herein as a second pass method or a second pass blending. Alternatively, the curatives and/or crosslinking agents may be mixed into the master batch after addition of the PE(D)M in the second pass to produce the final blend.

In second pass blending methods, mixing the rubber/additive (except curatives and crosslinking agents) blend with the PE(D)M may be done in mixer or other suitable system without removing the rubber/additive blend from the mixer (i.e., first pass blending) to produce the master batch. Alternatively, the rubber/additive (except curatives and crosslinking agents) blend may be removed from a mixer or other suitable system for producing the blend, and, then, mixed with the PE(D)M in a mixer or other suitable system (i.e., second pass blending) to produce the master batch.

The homogeneous mixture may be achieved by mixing for a certain time that corresponds to producing a homogeneous mixture. In some instances, a mixing parameter of the rubber and the chosen additives may change when a homogeneous mixture is achieved. For example, when mixing carbon black (an exemplary filler) with the rubber, the torque may reach a maximum, steady-state where no to minimal appreciable increases in torque are observed.

## Belts

Compositions of the present disclosure may be used as one or more components of a conveyor belt and/or transmission belt (e.g., V-belt, a flat belt, a toothed or synchronous belt, or multi-ribbed belt).

Conveyor belts can be manufactured as a layered composition of calendared sheets of rubber compounds of the present disclosure, other rubbers, and reinforcing fabrics (e.g., polyester fabrics and polyamide fabrics). For example, FIG. 1 illustrates an example conveyor belt construction 100 comprising, in order, a cover rubber layer 102, a first adhesive rubber layer 104, a reinforcing fabric 106, a second adhesive rubber layer 108, and a bottom rubber layer 110. The first adhesive rubber layer 104 and/or the second adhesive rubber layer 108 may be calendared sheets of rubber compounds that include PE(D)M polymers described in the present disclosure.

Manufacturing generally proceeds by layering the above layers (or other desired layer order) using a calendaring process. Then, the calendared layered structure is cured. High tack in the adhesive layers improves fusion between adjacent layers and mitigates the formation of air bubbles between layers.

Suitable additional polymers for use in the cover and bottom layers include, but are not limited to, polyurethane elastomers (including as well polyurethane/urea elastomers and so-called millable gums) (PU), polychloroprene rubber (CR), acrylonitrile butadiene rubber (NBR), hydrogenated NBR (HNBR), styrene-butadiene rubber (SBR), alkylated chlorosulfonated polyethylene (ACSM), polyepichlorohydrin, polybutadiene rubber (BR), natural rubber (NR), and ethylene alpha olefin elastomers such as ethylene propylene copolymers (EPM), ethylene propylene diene terpolymers (EPDM), ethylene octene copolymers (EOM), ethylene butene copolymers (EBM), ethylene octene diene terpolymers (EODM); ethylene butene diene terpolymers (EBDM); ethylene vinylacetate elastomers (EVM); ethylene methylacrylate (EAM); and silicone rubber.

FIG. 2 is a fragmented perspective view of a transmission belt. As shown in FIG. 2, synchronous belt 200 includes elastomeric main body portion 202 and sheave contact portion 204 positioned along the inner periphery of main body portion 202. Main body portion 202 comprises one or more rubber compounds that include PE(D)M polymers described in the present disclosure. Sheave contact portion 204 is configured to form alternating transverse projections 206 and troughs 208 configured to couple with a transverse-grooved pulley or sprocket. Tensile layer 210 is positioned within main body portion 202 for providing support and strength to belt 200. Tensile layer 210 includes a plurality of tensile cords 212 disposed longitudinally along the length of main body portion 212. Cords 212 comprise any suitable material, such as one

or more of cotton, rayon, polyamide, polyester, aramid, steel, glass, carbon, polyketone, basalt, boron, or discontinuous fibers oriented for low load carrying capability. Said cords 212 may be untreated or have a surface treatment. Said surface treatment may be a coating physically on or chemically bonded to the surface of the cords 212. As used herein, the term "coating" does not imply 100% coverage but can be any amount of coverage. The coating, physical or chemical, are used to enhance the bonding or tack between the generally polar cords and the generally nonpolar rubbers. Examples of coatings on the surface of the cords 212 can include, but are not limited to, polymers or small molecules that are dip coated, spray coated, or extruded on the surface. For example, polymers comprising amine or amide moieties may chemically bond to hydroxyl groups of rayon and polyester cords. Heat may be used to facilitate chemical reactions between cord surfaces and coatings. Optionally, a PE(D)M (e.g., a PE(D)M described herein) may be a component of the coating optionally with a SBR polymer (e.g., a SBR polymer described herein). For example, the PEDM component in the coating may be a PE(D)M polymer comprising 65 wt% to 97.5 wt% propylene, 2.5 wt% to 35 wt% $\alpha$-olefin, and 0.2 wt% to 20 wt% diene, said wt% based on the weight of the PE(D)M terpolymer, at an amount of from 1 phr to 100 phr. The SBR polymer component in the coating may have an amount of from 0 phr to 99 phr. Said PE(D)M polymer and SBR polymer in the coating does not necessarily have to be the same as the PE(D)M in the compositions described herein (e.g., PE(D)M polymer optionally with SBR polymer).

Reinforcing fabric 214 is disposed on projections 206 and troughs 208 and to form a sheave contact portion. Reinforcing fabric 214 may be of any suitable configuration such as a conventional weave consisting of warp and weft threads at an angle, or may include warp threads held together by space pick cords, or a knitted or braided configuration, or a nonwoven fabric. Suitable fabrics include one or more of cotton, polyester, polyamide, acrylic, aramid, polyketone, hemp, jute, or fiberglass. Said fabric 214 may be untreated or have a surface treatment. Said surface treatment may be a coating physically on or chemically bonded to the surface of the fabric 214. As used herein, the term "coating" does not imply 100% coverage but can be any amount of coverage. The coating, physical or chemical, are used to enhance the bonding or tack between the generally polar fabric and the generally nonpolar rubbers. Examples of coatings on the surface of the fabric 214 can include, but are not limited to, polymers or small molecules that are calendared, extruded, dip coated, or spray coated on the surface. For example, polymers comprising amine or amide moieties may chemically bond to hydroxyl groups of polyester fabric. Heat may be used to facilitate chemical reactions or physical bonding between fabric surfaces and coatings. Optionally, a PE(D)M (e.g., a PE(D)M described herein) may be a component of the coating optionally with a SBR polymer (e.g., a SBR polymer described herein). For example, the PEDM component in the coating may be a PE(D)M polymer comprising 65 wt% to 97.5 wt% propylene, 2.5 wt% to 35 wt% $\alpha$-olefin, and 0.2 wt% to 20 wt% diene, said wt% based on the weight of the PE(D)M terpolymer, at an amount of from 1 phr to 100 phr. The SBR polymer component in the coating may have an amount of from 0 phr to 99 phr. Said PE(D)M polymer and SBR polymer in the coating does not necessarily have to be the same as the PE(D)M in the compositions described herein (e.g., PE(D)M polymer optionally with SBR polymer).

FIG. 3 is a fragmented perspective view of a transmission belt. As shown in FIG. 3, notched V-belt 300 includes elastomeric body portion 302 and tensile layer 304 comprising cords 306. Main body portion 302 comprises one or more rubber compounds that include PE(D)M polymers described in the present disclosure. Cords 306 comprise any suitable material, such as one or more of cotton, rayon, polyamide, polyester, aramid, steel, glass, carbon, polyketone, basalt, boron, or discontinuous fibers oriented for low load carrying capability. V-belt 300 includes sheave contact portion 308 having two juxtaposed sides of the belt, designed to wedge into a V-sheave. V-belt 300 includes troughs 310 and projections 312. Included in the category of V-belts are those V-belts designed for continuously variable transmission ("CVT") applications, which often exhibit a belt body relatively wider than the belt thickness.

FIG. 4 is a fragmented perspective view of a transmission belt. As shown in FIG. 4, multi-V-ribbed belt 400 includes main body portion 402 and also tensile reinforcement member 404 comprising cords 406. Main body portion 402 comprises one or more rubber compounds that include PE(D)M polymers described in the present disclosure. Longitudinally grooved sheave contact portion 408 comprises a plurality of projections 410 alternating with a plurality of troughs 412 which together define driving surfaces 414 of the belt 400. In each of these instances of FIG. 2, FIG. 3, and FIG. 4, the respective sheave contact portion is coupleable/coupled with the respective main body portion and may be formed from the same material or layered with different material.

In each of the three exemplary belts shown in FIG. 2, FIG. 3, and FIG. 4, rubber compounds that include PE(D)M polymers described in the present disclosure that form the main belt body portion, may further comprise any suitable polymer. Suitable additional polymers include polyurethane elastomers (including as well polyurethane/urea elastomers and so-called millable gums) (PU), polychloroprene rubber (CR), acrylonitrile butadiene rubber (NBR), hydrogenated NBR (HNBR), styrene-butadiene rubber (SBR), alkylated chlorosulfonated polyethylene (ACSM), polyepichlorohydrin, polybutadiene rubber (BR), natural rubber (NR), and ethylene alpha olefin elastomers such as ethylene propylene copolymers (EPM), ethylene propylene diene terpolymers (EPDM), ethylene octene copolymers (EOM), ethylene butene copolymers (EBM), ethylene octene terpolymers (EODM); ethylene butene terpolymers (EBDM); ethylene vinylacetate elastomers (EVM); ethylene methylacrylate (EAM); and silicone rubber.

## EXAMPLES

Mooney viscosity (ML) can be determined by ASTM D1646-17 ((1+4), 125°C, 2 $s^{-1}$ shear rate). Melt Flow Rate (MFR) is measured according to ASTM D1238-13 test method, at 230° C and 2.16 kg load, and is expressed as dg/min or g/10 min. Ethylene content is determined using FTIR according the ASTM D3900-17 and is not corrected for diene content. ENB is determined using FTIR according to ASTM D6047-17.

Molecular Weight Determination by Polymer Char GPC-IR Hyphenated with Multiple Detectors

Unless otherwise indicated, the distributions and the moments of molecular weight (number average molecular weight (Mn), weight average molecular weight (Mw), and z-average molecular weight (Mz), Mw/Mn, etc.) are determined by using a high temperature Gel Permeation Chromatography (Polymer Char GPC-IR) equipped with a multiple-channel band-filter based Infrared detector IR5, an 18-angle Wyatt Dawn Heleos light scattering detector and a 4-capillary viscometer with Wheatstone bridge configuration. Three Agilent PLgel 10-μm Mixed-B LS columns are used to provide polymer separation. Aldrich reagent grade 1,2,4-trichlorobenzene (TCB) with 300 ppm antioxidant butylated hydroxytoluene (BHT) is used as the mobile phase. The TCB mixture is filtered through a 0.1-μm Teflon filter and degassed with an online degasser before entering the GPC instrument. The nominal flow rate is 1.0 ml/min and the nominal injection volume is 200 μL. The whole system including transfer lines, columns, and viscometer detector are contained in ovens maintained at 145°C. The polymer sample is weighed and sealed in a standard vial with 80-μL flow marker (Heptane) added to it. After loading the vial in the autosampler, polymer is automatically dissolved in the instrument with 8 ml added TCB solvent. The polymer is dissolved at 160°C with continuous shaking for about 2 hour for the polypropylene samples. The concentration (*c*), at each point in the chromatogram is calculated from the baseline-subtracted IR5 broadband signal intensity (*I*), using the following equation: $c = \beta I$, where $\beta$ is the mass constant. The mass recovery is calculated from the ratio of the integrated area of the concentration chromatography over elution volume and the injection mass which is equal to the predetermined concentration multiplied by injection loop volume. The conventional molecular weight (IR MW) is determined by combining universal calibration relationship with the column calibration which is performed with a series of monodispersed polystyrene (PS) standards ranging from 700 to 10M gm/mole. The MW at each elution volume is calculated with following equation:

$$\log M = \frac{\log(K_{PS}/K)}{a+1} + \frac{a_{PS}+1}{a+1}\log M_{PS}$$

where the variables with subscript "PS" stand for polystyrene while those without a subscript are for the test samples. In this method, $\alpha_{PS} = 0.67$ and $K_{PS} = 0.000175$ while $\alpha$ and K are for other materials as calculated from empirical equations (Sun, T. et al. Macromolecules 2001, 34, 6812). Here the concentrations are expressed in g/cm$^3$, molecular weight is expressed in g/mole, and intrinsic viscosity (hence K in the Mark-Houwink equation) is expressed in dL/g unless otherwise noted.

The LS molecular weight (*M*) at each point in the chromatogram is determined by analyzing the LS output using the Zimm model for static light scattering

$$\frac{K_o c}{\Delta R(\theta)} = \frac{1}{MP(\theta)} + 2A_2 c\,.$$

Here, $\Delta R(\theta)$ is the measured excess Rayleigh scattering intensity at scattering angle $\theta$, c is the polymer concentration determined from the IR5 analysis, $A_2$ is the second virial coefficient, $P(\theta)$ is the form factor for a monodisperse random coil, and $K_o$ is the optical constant for the system:

$$K_o = \frac{4\pi^2 n^2 (dn/dc)^2}{\lambda^4 N_A}$$

where $N_A$ is Avogadro's number, and (dn/dc) is the refractive index increment for the system. The refractive index, n=1.500 for TCB at 145°C and $\lambda$=665 nm. For purposes of the present disclosure and the claims thereto (dn/dc) = 0.1048 for ethylene-propylene copolymers, and (dn/dc) = 0.1048 - 0.0016ENB for EPDM comprising ENB as the diene, where ENB is the ENB content in wt% in the ethylene-propylene-diene terpolymer. Where other non-conjugated polyenes are used instead of (or in addition to) ENB, the ENB is taken as weight percent of total non-conjugated polyenes.

A high temperature Polymer Char viscometer, which has four capillaries arranged in a Wheatstone bridge

configuration with two pressure transducers, is used to determine specific viscosity. One transducer measures the total pressure drop across the detector, and the other, positioned between the two sides of the bridge, measures a differential pressure. The specific viscosity, $\eta_s$, for the solution flowing through the viscometer is calculated from their outputs. The intrinsic viscosity, [η], at each point in the chromatogram is calculated from the equation $[\eta]= \eta_s/c$, where c is concentration and is determined from the IR5 broadband channel output.

Differential Scanning Calorimetry (DSC) was used to determine glass transition temperature (Tg), melting temperature (Tm), and heat of fusion (Hf) of the polymers according to ASTM D3418-03 using a TA Instruments model Q200 machine. Samples weighing approximately 5-10 mg were kept in an aluminum sample pan and hermetically sealed. These were gradually heated to 200°C at a rate of 10°C/minute and thereafter, held at 200°C for 2 minutes. They were subsequently cooled to -90°C at a rate of 10°C/minute and held isothermally for 2 minutes at -90°C. This was followed by a second heating cycle wherein the samples were heated to 200 °C at 10 °C/minute. Both the first and second cycle thermal events were recorded.

During the second heating cycle, appearance of melting indicates crystallinity and thus measured heat of fusion is used to compute the crystallinity unless otherwise indicated. The thermal output, recorded as the area under the melting peak of the sample, is a measure of the heat of fusion and may be expressed in Joules per gram of polymer. The melting point is recorded as the temperature of the greatest heat absorption within the range of melting of the sample relative to a baseline measurement for the increasing heat capacity of the polymer as a function of temperature.

The percent crystallinity is calculated using the formula: [area under the curve (in J/g) / H° (in J/g)] * 100, where H° is the ideal heat of fusion for a perfect crystal of the homopolymer of the major monomer component. These values for H° are to be obtained from the Polymer Handbook, Fourth Edition, published by John Wiley and Sons, New York 1999, except that a value of 290 J/g is used for H°(polyethylene), a value of 140 J/g is used for H° (polybutene), and a value of 207 J/g is used for H°(polypropylene).

Tg was determined from the second heating cycle of by DSC.The $^{13}C$ solution NMR was performed on a 10 mm cryoprobe with a field strength of at least 600 MHz solvent mixture of ODCB (ortho-dichlorobenzene) and benzene-d6 ($C_6D_6$) (90:10) at 120° C with a flip angle of 90° and inverse gated decoupling with a 20 second delay. Sample preparation (polymer dissolution) was performed at 140°C where 0.20 grams of polymer was dissolved in an appropriate amount of solvent to give a final polymer solution volume of 3 ml. Chemical shifts were referenced to the solvent signal at 127.2 ppm.

The tacticity is calculated from integrating the $CH_3$ region of the propylene unit where the regions are defined as:

| | |
|---|---|
| mm region | 21.20-20.5 ppm |
| mr region | 20.5-19.75 ppm |
| rr region | 19.75-18.7 ppm |

To account for the portion of the EP sequence that overlaps in the mr and rr regions, the CH EPE peak at 32.8 ppm and the CH EPP peak at 30.5 ppm were used to remove the EPE and EPP contribution.

| | |
|---|---|
| mm region | 21.20-20.5 ppm |
| mr region | (20.5-19.75 ppm - CH EPP) |
| rr region | (19.75-18.7 ppm - CH EPE) |

The sum or "total" of the integrals of the mm, mr and rr regions are used to calculate the percentage of mm, mr and rr triads where "total" = mm + mr + rr.

$$\%mm = mm*100/total$$

$$\%mr = mr*100/total$$

$$\%rr = rr*100/total$$

Regio-defects and ENB sequence effects are not accounted for in the tacticity calculation. Their contribution is assumed to be negligible.

Percent dyad, m and r, are calculated from:

$$m = \%mm + (0.5*\%mr)$$

$$r = \%rr + (0.5*\%mr).$$

The "propylene tacticity index", expressed herein as [m/r], is calculated from the corrected integral regions as described above. When [m/r] is 0 to less than 1.0, the polymer is generally described as syndiotactic, when [m/r] is 1.0 the polymer is atactic, and when [m/r] is greater than 1.0 the polymer is generally described as isotactic.

The PE(D)M polymers were made by a polymerization process described in PCT/US2019/022738, filed March 18, 2019, and PCT/US2019/022764, filed on March 18, 2019".

Table 1 illustrates the polymer characteristics of three PE(D)M polymers used in making a plurality of compounds. No melting and crystallization events (Hf = 0) were found for all the PE(D)M samples in DSC testing. PEDM-1 did not shown any melting and crystallization events after the DSC experiment and subsequently aging at room temperature for 4 weeks as measured from the first heating cycle.

**Table 1. PE(D)M Polymers**

| Sample | **C2 by FTIR (wt%)** | **ENB by FTIR (wt%)** | ML (1+4) **at 125° C (MU)** | MFR (g/10 min, at 230°C) | $M_n$ (LS) (g/mol) | $M_w$ (LS) (g/mol) | $M_w$/ $M_n$ | $T_g$ (°C) |
|---|---|---|---|---|---|---|---|---|
| PEDM-1 | 4.6 | 2.8 | 15 | 7.1 | 82,537 | 167,793 | 2.03 | -6.2 |
| PEDM-2 | 9.7 | 2.7 | 17 | 7.2 | 78,064 | 164,111 | 2.10 | -13.6 |
| PEDM-3 | 15.3 | 2.8 | 15 | 6.8 | 73,360 | 154,333 | 2.10 | -18.1 |

**Table 1. PE(D)M Polymers (continued)**

| **Sample** | **$M_z$ (LS) (g/mol)** | **mm** | **mr** | **rr** | **m** | **r** | **m/r** |
|---|---|---|---|---|---|---|---|
| PEDM-1 | 265403 | 0.18 | 0.30 | 0.52 | 0.33 | 0.67 | 0.50 |
| PEDM-2 | 263810 | 0.20 | 0.20 | 0.60 | 0.30 | 0.70 | 0.43 |
| PEDM-3 | 246268 | | | | | | |

The PE(D)M polymers were used in preparing elastomeric compounds according to Table 2. Control samples used no additional polymer in place of the PE(D)M polymers or used a phenolic resin tackifier (SP1068, available from Schenectady Chemicals) in place of the PE(D)M polymers.

**Table 2**

| Compound | C1 | C2 | E1 | E2 | E3 |
|---|---|---|---|---|---|
| First Pass | | | | | |
| SBR1502 (phr) | 100 | 100 | 100 | 100 | 100 |
| carbon black (N 330) (phr) | 55 | 55 | 55 | 55 | 55 |
| Naphthenic oil (phr) | 5 | 5 | 5 | 5 | 5 |
| stearic acid (phr) | 2 | 2 | 2 | 2 | 2 |
| STRUKTOL® 40 MS (phr) | 3 | 3 | 3 | 3 | 3 |
| SANTOFLEX™ 6PPD (phr) | 1.5 | 1.5 | 1.5 | 1.5 | 1.5 |
| ANTAGE™ RD-G (phr) | 1 | 1 | 1 | 1 | 1 |
| zinc oxide (phr) | 3 | 3 | 3 | 3 | 3 |
| SP1068 (phr) | | 3 | | | |
| PEDM-1 (phr) | | | 10 | | |
| PEDM-2 (phr) | | | | 10 | |
| PEDM-3 (phr) | | | | | 10 |

(continued)

| Second Pass | | | | | |
|---|---|---|---|---|---|
| sulfur (phr) | 1.2 | 1.2 | 1.2 | 1.2 | 1.2 |
| N-tertiarybutyl-2-benzothiazole sulfonamide (TBBS) (phr) | 1.2 | 1.2 | 1.2 | 1.2 | 1.2 |
| diphenyl guanidine (DPG) (phr) | 1 | 1 | 1 | 1 | 1 |
| Total phr | 173.9 | 176.9 | 183.9 | 183.9 | 183.9 |
| SANTOFLEX™ 6PPD (N-(1,3-Dimethylbutyl)-N'-phenyl-p-phenylenediamine, available from Eastman Chemical) STRUKTOL® 40 MS (mixture of aromatic and aliphatic hydrocarbon resins, available from Struktol Company of America) ANTAGE™ RD-G (2,2,4-trimethyl-1,2-dihydroquinoline polymer, an antioxidant, available from Kawaguchi Chemical Industry) SBR1502 is available from Kumho Petrochemical. Carbon black (N 330) is available from SKI Carbon Black India Pvt.ltd. Naphthenic oil is available from GP Petroleums Ltd. | | | | | |

In the first pass, master batches were mixed using a lab scale 1.8 L capacity Intermix with Intermesh rotor (fill factor ~75%, for 4 minutes at Rotor speed : ~60 RPM, and dump temperature : 145 to 155 °C). In the second pass, curatives were added in a lab scale open 2 roll mill at 50 °C using 4 cross cuts each side, 6 pig rolls and 2 straight cuts. Total mixing time on open mill was about 8 minutes.

Compound ML at 100 °C was measured by the ASTM D1646-17 method. Moving Die Rheometer (MDR) was measured by the ASTM D5289 method. Mechanical properties, including hardness, tensile strength, and elongation were measured by the ASTM D412 method. Abrasion resistance (DIN) test method was based on DIN 53516.

The Picma tack test was used to measure tack of two uncured (i.e., green) flat compound surfaces (Table 3). Samples were prepared using compression molding at 100°C for 2 minutes with a thickness of 2 mm. Mylar film was used on the mold surface to avoid compounds sticking to mold.

**Table 3**

| Compound | C1 | C2 | E1 | E2 | E3 |
|---|---|---|---|---|---|
| Picma tack (kgf) | 1.05 | 1.20 | 1.52 | 1.49 | 1.56 |

The compounds comprising PE(D)M-1, PE(D)M-2, and PE(D)M-3 exhibit greater Picma tack than the control samples.

Table 4 provides the physical properties of the compounds (1) after curing (9 minutes at 160°C in air ) or (2) after curing (9 minutes at 160°C in air) and then aging (168 hours at 125°C in air).

**Table 4**

| Compound | C1 | C2 | E1 | E2 | E3 |
|---|---|---|---|---|---|
| Curing Properties | | | | | |
| MH - ML (dN.m) | 12.15 | 10.84 | 10.82 | 10.55 | 10.80 |
| t90 (min) | 6.79 | 6.50 | 6.76 | 6.85 | 6.72 |
| ts2 (min) | 3.47 | 3.16 | 3.54 | 3.62 | 3.55 |
| Physical Properties - cured | | | | | |
| Hardness (Shore A) | 62 | 62 | 60 | 59 | 59 |
| 100% modulus (MPa) | 2.2 | 2.0 | 2.0 | 2.0 | 2.0 |
| Tensile strength (MPa) | 20.6 | 23.6 | 21.0 | 19.3 | 21.0 |
| Elongation at break (%) | 530 | 660 | 610 | 580 | 610 |
| Physical Properties - cured then aged | | | | | |
| Change in Hardness (Shore A), after - before | 22 | 22 | 22 | 21 | 23 |
| Tensile strength (% retention) | 76 | 59 | 73 | 73 | 72 |

(continued)

| Physical Properties - cured then aged | | | | | |
|---|---|---|---|---|---|
| Elongation at break (% retention) | 26 | 15 | 25 | 26 | 26 |

While the physical properties of the example compounds comprising PE(D)M are comparable to the control compounds after curing, the example compounds retained more of their physical properties as compared to the C2 control compound, which comprises the phenolic resin tackifier. Further, the percent retention of physical properties is comparable to that of the C1 control compound. However, as illustrated in Table 3, the Picma tack values for the example compounds comprising PE(D)M are greater than either of the two control compounds.

The rheological properties of the compounds in Table 2 were measured (Table 5) where the example compounds comprising PE(D)M show a lower Mooney viscosity, which indicates the compounds are more easily processed with less energy consumption.

**Table 5**

| Compound | C1 | C2 | E1 | E2 | E3 |
|---|---|---|---|---|---|
| ML(1+4) at 100°C (MU) | 57.6 | 53.0 | 52.7 | 53.7 | 53.1 |

The abrasion properties of the cured compounds in Table 2 were measured (Table 6) to provide an indication of applicability in belt applications like conveyor belt applications. Each of the example compounds comprising PE(D)M have comparable to improved abrasion resistance as compared to the control compounds.

**Table 6**

| Compound | C1 | C2 | E1 | E2 | E3 |
|---|---|---|---|---|---|
| DIN abrasion loss ($mm^3$) | 122 | 127 | 136 | 127 | 117 |

Finally, the Payne effect of the compounds in Table 2 were measured (Payne, A.R., J Applied Polymer Science, 6 (19) 57-63). The Payne effect investigates how well carbon black fillers disperse in the compound. FIG. 5 is a plot of elastic modulus (G') as a function of strain where lower elastic modulus values at lower strain indicate a better dispersion of carbon black in the compound. From FIG. 1, each of the example compounds comprising PE(D)M have a reduced elastic modulus at strains ranging from 0.1% to 1% as compared to the control compound C1. Accordingly, the carbon black filler is better dispersed in the example compounds comprising PE(D)M.

## Claims

**1.** A composition comprising:

100 parts by weight per hundred parts by weight rubber (phr) of a rubber selected from the group consisting of butadiene/styrene copolymers, isoprene/butadiene copolymers, isoprene/styrene copolymers, and isoprene/-butadiene/styrene copolymers, and mixtures thereof;
1 phr to 30 phr of a propylene-$\alpha$-olefin-diene (PEDM) polymer comprising 75 wt% to 95 wt% propylene, 5 wt% to 25 wt% C2 or C4-C20 $\alpha$-olefin, and 2.5 wt% to 20 wt% diene, wherein the monomer content is determined according to the methods as disclosed in the description in paragraphs [0053]-[0056], said wt% based on the weight of the PEDM polymer wherein the wt% numbers are uncorrected numbers wherein wt% C2 plus wt% of C3-C20 $\alpha$-olefin equals 100%, and wherein the PEDM polymer has (a) Mooney viscosity (ML(1+4) @ 125°C, $2s^{-1}$ shear rate) as measured according to ASTM D1646-17 of 1 to 100, (b) melt flow rate of 0.1 g/min to 100 g/min as measured according to ASTM D1238-13 at 230°C and 2.16 kg load, (c) a weight average molecular weight to n-average molecular weight (Mw/Mn) ratio of 1.5 to 3.0, and (d) a heat of fusion (Hf) of less than 1 J/g.

**2.** The composition of claim 1, wherein the rubber comprises styrene butadiene rubber.

**3.** The elastomeric composition of any one of the forgoing claims, wherein the PEDM polymer has a polymer Tg (°C) greater than or equal to -7.386-(87.98*E)+(294*D) and less than or equal to -1.386-(87.98*E)+(294*D) wherein E is the mole fraction of ethylene in the polymer and D is the mole fraction of diene in the polymer.

**4.** The composition of any one of the foregoing claims, wherein the PEDM polymer has a number average molecular weight of 70,000 g/mol to 150,000 g/mol.

**5.** The composition of any one of the foregoing claims, wherein the PEDM polymer has a weight average molecular weight of 150,000 g/mol to 320,000 g/mol.

**6.** The composition of any one of the foregoing claims, wherein the PEDM polymer has a polydispersity index of 2.0 to 2.6.

**7.** The composition of any one of the foregoing claims, wherein the PEDM polymer has a glass transition temperature of -45°C to -2°C.

**8.** The composition of any one of the foregoing claims, wherein the composition has a Picma tack of 1.3 kgf to 2.0 kgf.

**9.** A method comprising:

producing a master batch at a first temperature, the master batch comprising:

100 parts by weight per hundred parts by weight rubber (phr) of a rubber selected from the group consisting of butadiene/styrene copolymers, isoprene/butadiene copolymers, isoprene/styrene copolymers, and isoprene/butadiene/styrene copolymers, and mixtures thereof;
1 phr to 30 phr of a propylene-α-olefin-diene (PEDM) polymer comprising 75 wt% to 95 wt% propylene, 5 wt% to 25 wt% C2 or C4-C20 α-olefin, and 2.5 wt% to 20 wt% diene, wherein the monomer content is determined according to the methods as disclosed in the description in paragraphs [0053]-[0056], said wt% based on the weight of the PEDM polymer wherein the wt% numbers are uncorrected numbers wherein wt% C2 plus wt% of C3-C20 α-olefin equals 100%, and wherein the PEDM polymer has (a) Mooney viscosity (ML(1+4) @ 125°C, $2s^{-1}$ shear rate) as measured according to ASTM D1646-17 of 1 to 100, (b) melt flow rate of 0.1 g/min to 100 g/min as measured according to ASTM D1238-13 at 230°C and 2.16 kg load, (c) a weight average molecular weight to n-average molecular weight (Mw/Mn) ratio of 1.5 to 3.0, and (d) a heat of fusion (Hf) of less than 1 J/g; and
an additive selected from the group consisting of: a filler, a process oil, a plasticizer, a compatibilizer, a crosslinker, and any combination thereof; and

mixing a curative and/or a crosslinking agent into the master batch at a second temperature that is lower than the first temperature.

**10.** The method of claim 9, wherein producing the master batch comprises:
mixing the rubber and the additive until the additive is incorporated before adding the PEDM.

**11.** The method of any one of claims 9-10, wherein the PEDM polymer has a number average molecular weight of 70,000 g/mol to 150,000 g/mol.

**12.** The method of any one of claims 9-11, wherein the PEDM polymer has a weight average molecular weight of 150,000 g/mol to 320,000 g/mol.

**Patentansprüche**

**1.** Zusammensetzung, umfassend:

100 Gewichtsteile pro 100 Gewichtsteile Kautschuk (phr) eines Kautschuks, ausgewählt aus der Gruppe bestehend aus Butadien/Styrol-Copolymeren, Isopren/-Butadien-Copolymeren, Isopren/Styrol-Copolymeren und Isopren/Butadien/Styrol-Copolymeren sowie Mischungen davon;
1 phr bis 30 phr Propylen-α-Olefin-Dien (PEDM)-Polymer, das 75 Gew.% bis 95 Gew.% Propylen, 5 Gew.% bis 25 Gew.% $C_2$- oder $C_4$-$C_{20}$-α-Olefin und 2,5 Gew.% bis 20 Gew.% Dien umfasst, wobei der Monomergehalt gemäß dem in der Beschreibung in den Absätzen [0053]-[0056] offenbarten Verfahren bestimmt wird, wobei die Gew.% auf das Gewicht des PEDM-Polymers bezogen sind, wobei die Gew.%-Zahlen unkorrigierte Zahlen sind, wobei Gew.% $C_2$ plus Gew.% $C_3$-$C_{20}$-α-Olefin gleich 100% sind und wobei das PEDM-Polymer eine (a) Mooney-Viskosität (ML(1+4) @ 125°C, 2 $s^{-1}$ Schergeschwindigkeit), gemessen gemäß ASTM D1646-17, von 1 bis 100, (b) eine Schmelzflussrate von 0,1 g/min bis 100 g/min, gemessen gemäß ASTM D1238-13 bei 230°C und 2,16 kg Last, (c) ein Verhältnis von Molekulargewicht (Gewichtsmittel) zu Molekulargewicht (Zahlenmittel) ($M_w/M_n$) von 1,5 bis 3,0 und (d) eine Schmelzwärme (Hf) von weniger als 1 J/g aufweist.

**2.** Zusammensetzung nach Anspruch 1, wobei der Kautschuk Styrol-Butadien-Kautschuk umfasst.

**3.** Elastomer-Zusammensetzung nach einem der vorstehenden Ansprüche, wobei das PEDM-Polymer eine Polymer-Glasübergangstemperatur ($T_g$, °C) aufweist, die größer oder gleich -7,386-(87,98*E)+(294*D) und kleiner oder gleich -1,386-(87,98*E)+(294*D) ist, wobei E der Molenbruch von Ethylen im Polymer und D der Molenbruch von Dien im Polymer ist.

**4.** Zusammensetzung nach einem der vorstehenden Ansprüche, wobei das PEDM-Polymer ein Molekulargewicht (Zahlenmittel) von 70.000 g/mol bis 150.000 g/mol aufweist.

**5.** Zusammensetzung nach einem der vorstehenden Ansprüche, wobei das PEDM-Polymer ein Molekulargewicht (Gewichtsmittel) von 150.000 g/mol bis 320.000 g/mol aufweist.

**6.** Zusammensetzung nach einem der vorstehenden Ansprüche, wobei das PEDM-Polymer einen Polydispersitätsindex von 2,0 bis 2,6 aufweist.

**7.** Zusammensetzung nach einem der vorstehenden Ansprüche, wobei das PEDM-Polymer eine Glasübergangstemperatur von -45°C bis -2°C aufweist.

**8.** Zusammensetzung nach einem der vorstehenden Ansprüche, wobei die Zusammensetzung eine Picma-Klebkraft von 1,3 kgf bis 2,0 kgf aufweist.

**9.** Verfahren, umfassend:
Herstellen einer Mastercharge bei einer ersten Temperatur, wobei die Mastercharge umfasst:

100 Gewichtsteile pro 100 Gewichtsteile Kautschuk (phr) eines Kautschuks, ausgewählt aus der Gruppe bestehend aus Butadien/Styrol-Copolymeren, Isopren/Butadien-Copolymeren, Isopren/Styrol-Copolymeren und Isopren/Butadien/Styrol-Copolymeren sowie Mischungen davon,
1 phr bis 30 phr eines Propylen-α-Olefin-Dien (PEDM)-Polymers, das 75 Gew.% bis 95 Gew.% Propylen, 5 Gew.% bis 25 Gew.% $C_2$- oder $C_4$-$C_{20}$-α-Olefin und 2,5 Gew.% bis 20 Gew.% Dien umfasst, wobei der Monomergehalt gemäß dem in der Beschreibung in den Absätzen [0053]-[0056] offenbarten Verfahren bestimmt wird, wobei die Gew.%-Zahlen unkorrigierte Zahlen sind, wobei Gew.% $C_2$ plus Gew.-% $C_3$-$C_{20}$-α-Olefin gleich 100% sind und wobei das PEDM-Polymer (a) eine Mooney-Viskosität (ML(1+4) @ 125°C, 2$s^{-1}$ Schergeschwindigkeit), gemessen gemäß ASTM D1646-17, von 1 bis 100, (b) eine Schmelzflussrate von 0,1 g/min bis 100 g/min, gemessen gemäß ASTM D1238-13 bei 230°C und 2,16 kg Last, (c) ein Verhältnis von Molekulargewicht (Gewichtsmittel) zu Molekulargewicht (Zahlenmittel) ($M_w/M_n$) von 1,5 bis 3,0 und (d) eine Schmelzwärme (Hf) von weniger als 1 J/g aufweist, und
ein Additiv, das aus der Gruppe ausgewählt ist, die aus einem Füllstoff, einem Prozessöl, einem Weichmacher, einem Kompatibilisierungsmittel, einem Vernetzungsmittel und einer beliebigen Kombination davon besteht; und
Einmischen eines Härtungsmittels und/oder eines Vernetzungsmittels in die Mastercharge bei einer zweiten Temperatur, die niedriger ist als die erste Temperatur.

**10.** Verfahren nach Anspruch 9, wobei die Herstellung der Masterbatch umfasst:
Mischen des Kautschuks und des Additivs, bis das Additiv eingearbeitet ist, bevor das PEDM hinzugefügt wird.

**11.** Verfahren nach einem der Ansprüche 9 bis 10, wobei das PEDM-Polymer ein Molekulargewicht (Zahlenmittel) von 70.000 g/mol bis 150.000 g/mol aufweist.

**12.** Verfahren nach einem der Ansprüche 9 bis 11, wobei das PEDM-Polymer ein Molekulargewicht (Gewichtsmittel) von 150.000 g/mol bis 320.000 g/mol aufweist.

**Revendications**

1. Composition comprenant :

100 parties en poids pour cent parties en poids de caoutchouc (phr) d'un caoutchouc choisi dans le groupe constitué par les copolymères butadiène/styrène, les copolymères isoprène/butadiène, les copolymères isoprène/styrène et les copolymères isoprène/butadiène/styrène, et leurs mélanges ;
1 phr à 30 phr d'un polymère propylène-$\alpha$-oléfine-diène (PEDM) comprenant 75 % en poids à 95 % en poids de propylène, 5 % en poids à 25 % en poids d'$\alpha$-oléfine en C2 ou C4-C20, et 2,5 % en poids à 20 % en poids de diène, la teneur en monomère étant déterminée selon les procédés décrits dans la description aux paragraphes [0053]-[0056], lesdits % en poids étant basés sur le poids du polymère PEDM, dans laquelle les nombres de % en poids sont des nombres non corrigés dans laquelle % en poids en C2 plus % en poids d'$\alpha$-oléfine en C3-C20 est égal à 100 % en poids, et dans laquelle le polymère PEDM a (a) une viscosité Mooney (ML(1+4) à 125 °C, vitesse de cisaillement $2s^{-1}$) telle que mesurée selon la norme ASTM D1646-17 de 1 à 100, (b) un indice de fluidité à l'état fondu de 0,1 g/min à 100 g/min tel que mesuré selon la norme ASTM D1238-13 à 230 °C et une charge de 2,16 kg, (c) un rapport poids moléculaire moyen en poids sur poids moléculaire n-moyen (Mw/Mn) de 1,5 à 3,0, et (d) une chaleur de fusion (Hf) inférieure à 1 J/g.

2. Composition selon la revendication 1, dans laquelle le caoutchouc comprend un caoutchouc styrène-butadiène.

3. Composition élastomère selon l'une quelconque des revendications précédentes, dans laquelle le polymère PEDM a une Tg de polymère (°C) supérieure ou égale à - 7,386-(87,98*E)+(294*D) et inférieure ou égale à -1,386-(87,98*E) +(294*D) où E est la fraction molaire d'éthylène dans le polymère et D est la fraction molaire de diène dans le polymère.

4. Composition selon l'une quelconque des revendications précédentes, dans laquelle le polymère PEDM a un poids moléculaire moyen en nombre de 70 000 g/mole à 150 000 g/mole.

5. Composition selon l'une quelconque des revendications précédentes, dans laquelle le polymère PEDM a un poids moléculaire moyen en poids de 150 000 g/mole à 320 000 g/mole.

6. Composition selon l'une quelconque des revendications précédentes, dans laquelle le polymère PEDM a un indice de polydispersité de 2,0 à 2,6.

7. Composition selon l'une quelconque des revendications précédentes, dans laquelle le polymère PEDM a une température de transition vitreuse de -45 °C à -2 °C.

8. Composition selon l'une quelconque des revendications précédentes, dans laquelle la composition a un collant Picma de 1,3 kgf à 2,0 kgf.

9. Procédé comprenant :
la production d'un mélange maître à une première température, le mélange maître comprenant :

100 parties en poids pour cent parties en poids de caoutchouc (phr) d'un caoutchouc choisi dans le groupe constitué par les copolymères butadiène/styrène, les copolymères isoprène/butadiène, les copolymères isoprène/styrène et les copolymères isoprène/butadiène/styrène, et leurs mélanges ;
1 phr à 30 phr d'un polymère propylène-$\alpha$-oléfine-diène (PEDM) comprenant 75 % en poids à 95 % en poids de propylène, 5 % en poids à 25 % en poids d'$\alpha$-oléfine en C2 ou C4-C20, et 2,5 % en poids à 20 % en poids de diène, la teneur en monomère étant déterminée selon les procédés décrits dans la description aux paragraphes [0053]-[0056], lesdits % en poids étant basés sur le poids du polymère PEDM, dans laquelle les nombres de % en poids sont des nombres non corrigés dans laquelle % en poids en C2 plus % en poids d'$\alpha$-oléfine en C3-C20 est égal à 100 % en poids, et dans laquelle le polymère PEDM a (a) une viscosité Mooney (ML(1+4) à 125 °C, vitesse de cisaillement $2s^{-1}$) telle que mesurée selon la norme ASTM D1646-17 de 1 à 100, (b) un indice de fluidité à l'état fondu de 0,1 g/min à 100 g/min tel que mesuré selon la norme ASTM D1238-13 à 230 °C et une charge de 2,16 kg, (c) un rapport poids moléculaire moyen en poids sur poids moléculaire n-moyen (Mw/Mn) de 1,5 à 3,0, et (d) une chaleur de fusion (Hf) inférieure à 1 J/g ; et
un additif choisi dans le groupe constitué par : une charge, une huile de traitement, un plastifiant, un agent de compatibilité, un agent de réticulation, et toute combinaison de ceux-ci ; et

le mélange d'un agent de durcissement et/ou d'un agent de réticulation dans le mélange maître à une seconde température qui est inférieure à la première température.

**10.** Procédé selon la revendication 9, dans lequel la production du mélange maître comprend : le mélange du caoutchouc et de l'additif jusqu'à ce que l'additif soit incorporé avant d'ajouter le PEDM.

**11.** Procédé selon l'une quelconque des revendications 9 à 10, dans lequel le polymère PEDM a un poids moléculaire moyen en nombre de 70 000 g/mole à 150 000 g/mole.

**12.** Procédé selon l'une quelconque des revendications 9 à 11, dans lequel le polymère PEDM a un poids moléculaire moyen en poids de 150 000 g/mole à 320 000 g/mole.

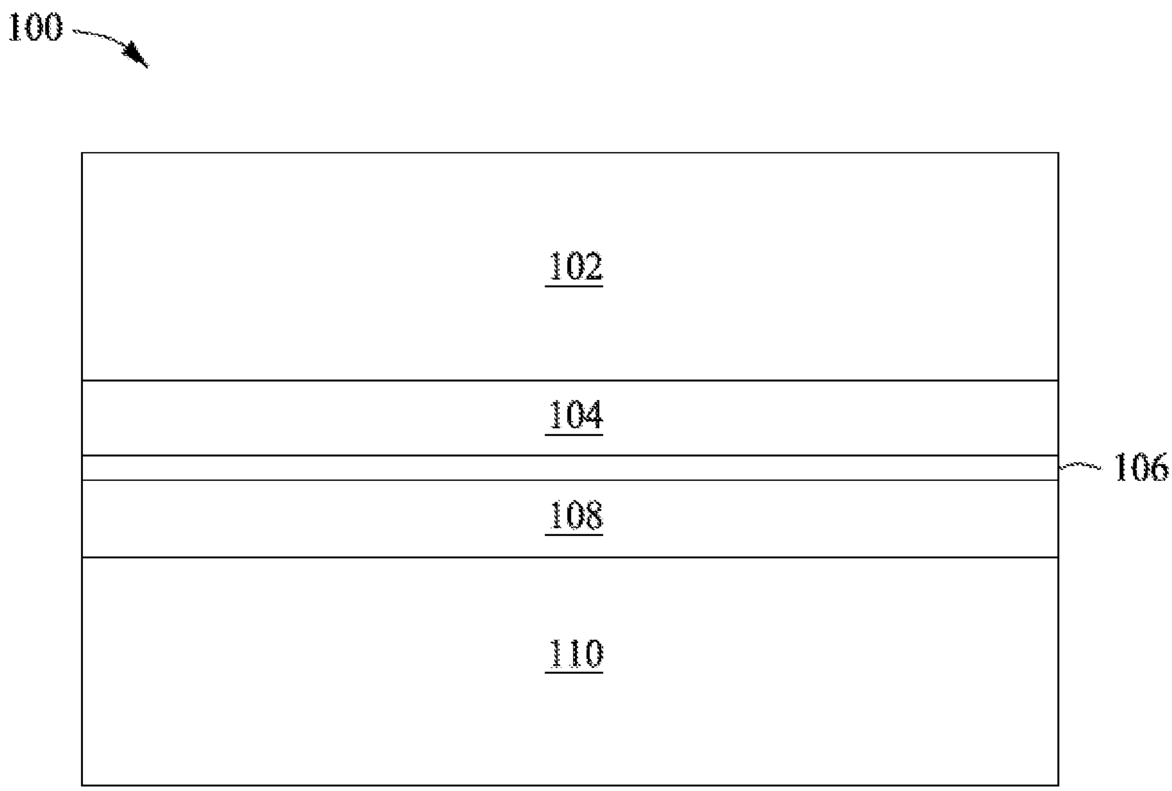


FIG. 1

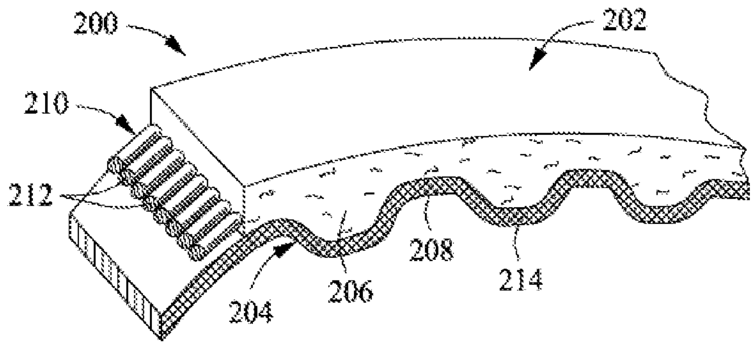


FIG. 2

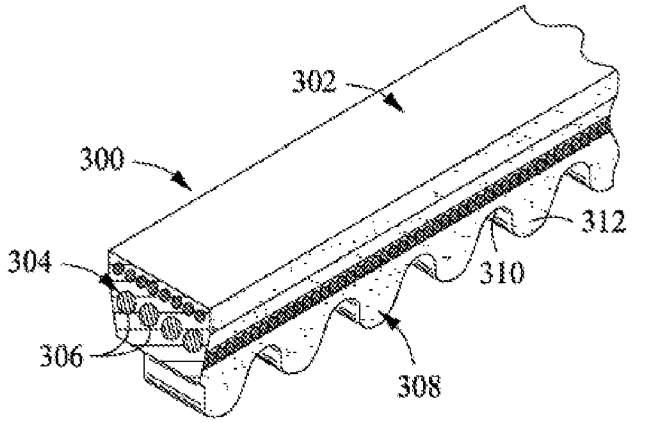


FIG. 3

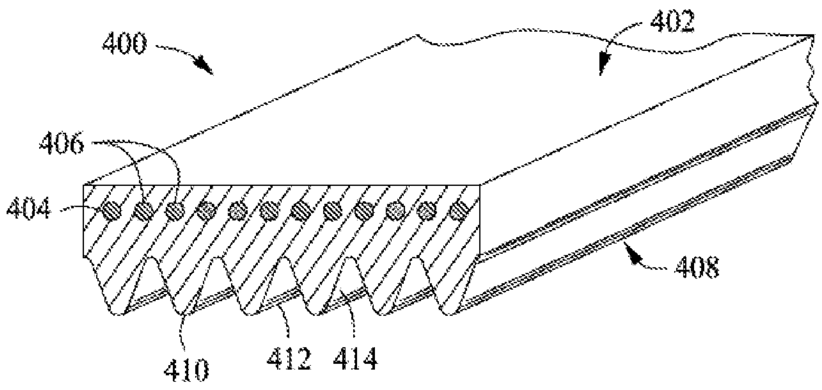


FIG. 4

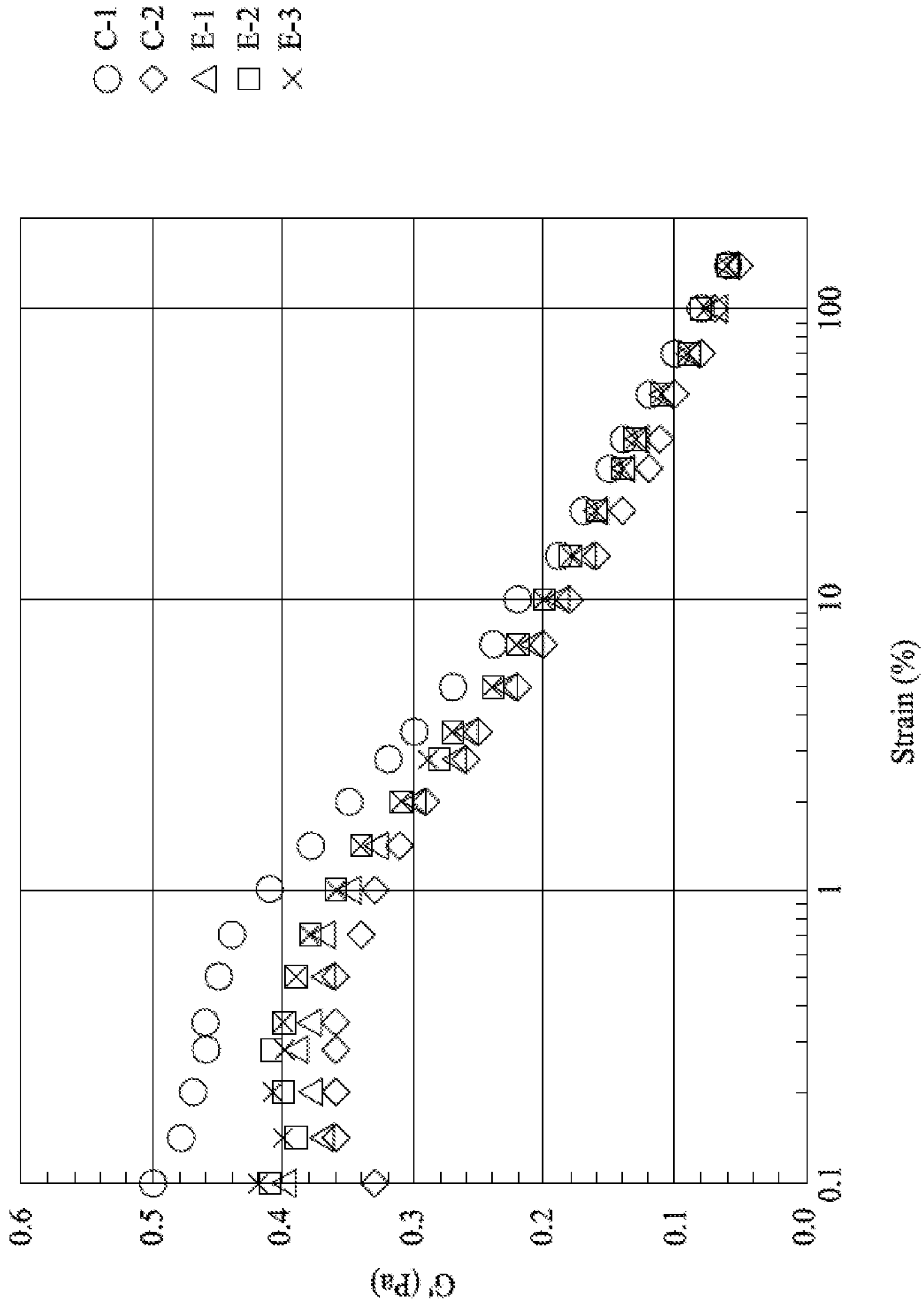


FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018190940 A
- WO 2016053541 A
- WO 2019112728 A
- WO 2016053542 A
- US 5504172 A
- US 2004054086 A
- US 2019022738 W
- US 2019022764 W
- US 5041584 A
- WO 9843983 A
- US 5942459 A
- US 5447895 A
- US 8658556 B
- US 6211105 B
- US 7247687 B
- US 5153157 A
- US 5453410 A
- EP 0573120 B1
- WO 9407928 A
- WO 9514044 A
- WO 9515815 A
- US 5427991 A
- US 62149799
- US 62103372
- US 2015067582 W
- US 7915354 B
- US 5750625 A
- US 6582633 B
- US 3615972 A
- WO 9946320 A
- WO 9943758 A


### Non-patent literature cited in the description


- **B. WUNDERLICH**. Thermal Analysis. Academic Press, 1990, 417-431
- **F. A. BOVEY**. Polymer Conformation and Configuration. Academic Press, 1969
- **J. RANDALL**. Polymer Sequence Determination, C-NMR Method. Academic Press, 1977
- **H.N. CHENG**. *Macromolecules*, 1984, vol. 17, 1950
- **J. A. EWEN**. Catalytic Polymerization of Olefins: Proceedings of the International Symposium on Future Aspects of Olefin Polymerization. Elsevier, 1986, 271-292
- **J.C. RANDALL**. A Review of High Resolution liquid C NMR Characterizations of ethylene-based polymers. *Polymer Reviews*, 1989, vol. 29, 2 201-317
- A Simple "Back of the Envelope" Method for Estimating the Densities and Molecular Volumes of Liquids and Solids. *Journal of Chemical Education*, November 1994, vol. 71 (11), 962-964
- PLASTICS EXTRUSION TECHNOLOGY. Hanser, 1988, 26-37
- POLYPROPYLENE HANDBOOK. Hanser, 1996, 304-348
- **SUN, T. et al.** *Macromolecules*, 2001, vol. 34, 6812
- Polymer Handbook. John Wiley and Sons, 1999
- **PAYNE, A.R.** *J Applied Polymer Science*, vol. 6 (19), 57-63